# EUROPEAN PATENT APPLICATION

(11) **EP 4 560 959 A1**
(43) Date of publication of application: **28.05.2025**
(21) Application number: 23849117.9
(22) Date of filing: 30.06.2023
(51) Int. Cl.: H04L 5/00

(54) **COMMUNICATION METHOD, APPARATUS, AND SYSTEM**

(30) Priority: 01.08.2022 CN 202210917591
(71) Applicant: Huawei Technologies Co., Ltd., Shenzhen, Guangdong 518129 (CN); Peng Cheng Laboratory, Shenzhen, Guangdong 518055 (CN)
(72) Inventor: HAN, Chengcheng, Shenzhen, Guangdong 518129 (CN); GUO, Zhiheng, Shenzhen, Guangdong 518129 (CN); XIE, Xinqian, Shenzhen, Guangdong 518129 (CN)
(74) Representative: Körber, Martin Hans
(86) International application number: PCT/CN2023/104325
(87) International publication number: WO 2024/027407

(57) **Abstract**

This application provides a communication method, apparatus, and system. In the communication method, a network device configures different quantities of communication resources based on coverage capabilities of different beams, and a terminal device exchanges information with the network device by using the communication resources, so that utilization of communication resources can be improved, and communication efficiency can be improved.

## Description

This application claims priority to Chinese Patent Application No. 202210917591.3, filed with the China National Intellectual Property Administration on August 1, 2022 and entitled "COMMUNICATION METHOD, APPARATUS, AND SYSTEM", which is incorporated herein by reference in its entirety.

### TECHNICAL FIELD

This application relates to the communication field, and in particular, to a communication method, apparatus, and system.

### BACKGROUND

With rapid development of new radio (New Radio, NR) in a 5th generation mobile communication technology, a communication rate requirement of an enhanced mobile broadband communication (enhanced mobile broadband, eMBB) service continues to grow, and millimeter-wave communication is widely applied. In a random access process, a manner of repeatedly sending a preamble sequence is currently used, so that the millimeter-wave communication is free from environment impact, and a signal coverage capability is improved. However, coverage capabilities of millimeter waves are different. Evenly configuring communication resources for different beams reduces utilization of the communication resources, and consequently, random access efficiency of a terminal is reduced.

Therefore, how to improve utilization of communication resources and communication efficiency is an urgent problem to be resolved.

### SUMMARY

This application provides a communication method, apparatus, and system, to improve utilization of communication resources.

According to a first aspect, an embodiment of this application provides a communication method. The method may be performed by a terminal device, or may be performed by a chip or a circuit used in the terminal device. This is not limited in this application. For ease of description, the following uses an example in which the method is performed by a terminal apparatus for description. The method may include: The terminal device receives N SSBs, where N is a positive integer greater than or equal to 2; the terminal device receives indication information, where the indication information indicates a PRACH resource, the PRACH resource includes a first PRACH resource and a second PRACH resource, the N SSBs include a first SSB and a second SSB, the first SSB and the second SSB are associated with the first PRACH resource, and the second SSB is associated with the second PRACH resource, or a quantity of PRACH resources associated with the first SSB is different from a quantity of PRACH resources associated with the second SSB; and the terminal device sends a preamble sequence on the PRACH resource based on the indication information.

In the method, a network device flexibly configures the PRACH resource for the terminal device, for example, differentially configures communication resources for coverage capabilities of different beams. This can improve utilization of communication resources, avoid resource insufficiency or a resource waste, and improve communication efficiency.

With reference to the first aspect, in some implementations of the first aspect, the PRACH resource includes an RO resource and/or a code resource, and that a quantity of PRACH resources associated with the first SSB is different from a quantity of PRACH resources associated with the second SSB includes: A quantity of RO resources associated with the first SSB is different from a quantity of RO resources associated with the second SSB.

It should be understood that coverage capabilities of beams corresponding to the first SSB and the second SSB may be different, and different quantities of RO resources are configured for the first SSB and the second SSB, to send preamble sequences. This can improve reliability of sending the preamble sequences by using different beams, and improve resource utilization.

With reference to the first aspect, in some implementations of the first aspect, the first SSB belongs to a first SSB set, the second SSB belongs to a second SSB set, the second SSB set includes D SSBs, and D is a positive integer greater than or equal to 1. The D SSBs belong to Q mutually exclusive non-zero SSB subsets, Q is a positive integer greater than or equal to 2, the Q mutually exclusive non-zero SSB subsets include a first SSB subset and a second SSB subset, the first SSB subset includes a third SSB, the second SSB subset includes a fourth SSB, and a quantity of ROs associated with the third SSB is different from a quantity of ROs associated with the fourth SSB.

Alternatively, any one of the D SSBs is associated with a same quantity of ROs.

In other words, the second SSB set may be further divided into a plurality of mutually exclusive non-empty subsets, the plurality of subsets correspond to different quantities of ROs, and quantities of ROs associated with different SSBs in each subset may be the same. Alternatively, a case in which all SSBs included in the second SSB set belong to a same subset may be equivalent to a case in which subset division does not need to be performed.

It should be understood that an SSB included in the second SSB set may be an SSB in the first SSB set. For example, the first SSB set includes N SSBs, the second SSB set includes J SSBs, J is less than N, and the J SSBs belong to the N SSBs. This may also be understood as that the first SSB set includes all SSBs configured by the network device for the terminal device, and the SSBs in the second SSB set are SSBs that need to be enhanced in the SSBs.

With reference to the first aspect, in some implementations of the first aspect, a quantity of RSRP thresholds corresponding to the first SSB subset is different from a quantity of RSRP thresholds corresponding to the second SSB subset.

It should be understood that an RSRP threshold corresponds to a quantity of repeated sending times, SSBs in different subsets correspond to different maximum quantities of repeated sending times, and different SSBs in a same subset correspond to different actual quantities of repeated sending times.

With reference to the first aspect, in some implementations of the first aspect, that the indication information indicates a PRACH resource includes: The indication information indicates a first parameter, and the first parameter includes at least one of the following: an SSB in the second SSB set, a subset to which the SSB in the second SSB set belongs, quantities of ROs corresponding to SSBs in different subsets of the second SSB set, time-frequency positions of PRACHs corresponding to the SSBs in different subsets of the second SSB set, maximum quantities of repeated sending times corresponding to the SSBs in different subsets of the second SSB set, division formats of preamble sequences corresponding to the SSBs in different subsets of the second SSB set, a quantity of ROs corresponding to the SSB in the second SSB set, a time-frequency position of a PRACH corresponding to the SSB in the second SSB set, a maximum quantity of repeated sending times corresponding to the SSB in the second SSB set, or a division format of a preamble sequence corresponding to the SSB in the second SSB set.

It should be understood that the foregoing plurality of parameters may be classified into two types, which correspond to a case in which the second SSB set is divided into subsets and a case in which the second SSB set is not divided into subsets. In this manner, the network device may indicate the foregoing parameters to the terminal device by using different fields in the indication information or by using different indication information, so that flexibility is high.

With reference to the first aspect, in some implementations of the first aspect, the indication information includes at least one of a first field, a second field, a third field, a fourth field, and a fifth field.

The first field indicates the time-frequency positions of the PRACHs corresponding to the SSBs in different subsets of the second SSB set, a length of the first field is a minimum integer greater than log₂(M), and M is a type of a quantity of slots included in a time interval between the first PRACH and the second PRACH.

When the second field indicates subsets of the N SSBs, a length of the second field is a minimum integer greater than (P-1)*log₂(N), and P is a quantity of subsets.

When the third field indicates the quantities of ROs corresponding to the SSBs in different subsets of the second SSB set, a length of the third field is a minimum integer greater than log₂(O), and O is a type of a cardinality of a quantity of ROs.

When the fourth field indicates the maximum quantities of repeated sending times corresponding to the SSBs in different subsets of the second SSB set, a length of the fourth field is a minimum integer greater than log₂(R), and R is a type of a cardinality of quantities of repeated sending times corresponding to the SSBs in different subsets.

When the fifth field indicates the division formats of the preamble sequences of the SSBs in different subsets of the second SSB set, a length of the fifth field is a minimum integer greater than log₂(T), and T is a type of division of the preamble sequences of the SSBs in different subsets.

With reference to the first aspect, in some implementations of the first aspect, the indication information further indicates an RSRP threshold corresponding to the first SSB subset and/or an RSRP threshold corresponding to the second SSB subset, and different RSRP thresholds correspond to different repetition quantities.

It should be understood that the RSRP threshold may be indicated, or may be preconfigured. This is not limited in embodiments of this application.

With reference to the first aspect, in some implementations of the first aspect, the terminal device measures N RSRPs corresponding to the N SSBs, and determines a first beam from N beams, where an RSRP corresponding to the first beam is a largest RSRP in the N RSRPs; the terminal device determines an SSB subset corresponding to the first beam, and determines an RSRP threshold set corresponding to the SSB subset corresponding to the first beam; and the terminal device determines, based on the RSRP corresponding to the first beam and the RSRP threshold set, a repetition quantity corresponding to the first beam. The sending a preamble sequence on the PRACH resource based on the indication information includes: sending the preamble sequence on the PRACH resource based on the repetition quantity corresponding to the first beam.

According to a second aspect, an embodiment of this application provides a communication method. The method may be performed by a network device, or may be performed by a chip or a circuit used in the network device. This is not limited in this application. For ease of description, the following uses an example in which the method is performed by the network device for description. The method may include: The network device sends N SSBs, where N is a positive integer greater than or equal to 2; the network device sends indication information, where the indication information indicates a PRACH resource, the PRACH resource includes a first PRACH resource and a second PRACH resource, the N SSBs include a first SSB and a second SSB, the first SSB and the second SSB are associated with the first PRACH resource, the second SSB is associated with the second PRACH resource, and a quantity of PRACHs associated with the first SSB is different from a quantity of PRACHs associated with the second SSB; and the network device receives a preamble sequence on the PRACH resource.

With reference to the second aspect, in some implementations of the second aspect, the PRACH resource includes an RO resource and/or a code resource, and that a quantity of PRACH resources associated with the first SSB is different from a quantity of PRACH resources associated with the second SSB includes: A quantity of RO resources associated with the first SSB is different from a quantity of RO resources associated with the second SSB.

With reference to the second aspect, in some implementations of the second aspect, the first SSB belongs to a first SSB set, the second SSB belongs to a second SSB set, the second SSB set includes D SSBs, and D is a positive integer greater than or equal to 1.

The D SSBs belong to Q mutually exclusive non-zero SSB subsets, Q is a positive integer greater than or equal to 2, the Q mutually exclusive non-zero SSB subsets include a first SSB subset and a second SSB subset, the first SSB subset includes a third SSB, the second SSB subset includes a fourth SSB, and a quantity of ROs associated with the third SSB is different from a quantity of ROs associated with the fourth SSB.

Alternatively, any one of the D SSBs is associated with a same quantity of ROs.

With reference to the second aspect, in some implementations of the second aspect, a quantity of RSRP thresholds corresponding to the first SSB subset is different from a quantity of RSRP thresholds corresponding to the second SSB subset.

With reference to the second aspect, in some implementations of the second aspect, that the indication information indicates a PRACH resource includes:
The indication information indicates a first parameter, and the first parameter includes at least one of the following: an SSB in the second SSB set, a subset to which the SSB in the second SSB set belongs, quantities of ROs corresponding to SSBs in different subsets of the second SSB set, time-frequency positions of PRACHs corresponding to the SSBs in different subsets of the second SSB set, maximum quantities of repeated sending times corresponding to the SSBs in different subsets of the second SSB set, division formats of preamble sequences corresponding to the SSBs in different subsets of the second SSB set, a quantity of ROs corresponding to the SSB in the second SSB set, a time-frequency position of a PRACH corresponding to the SSB in the second SSB set, a maximum quantity of repeated sending times corresponding to the SSB in the second SSB set, or a division format of a preamble sequence corresponding to the SSB in the second SSB set.

With reference to the second aspect, in some implementations of the second aspect, the indication information includes at least one of a first field, a second field, a third field, a fourth field, and a fifth field.

The first field indicates the time-frequency positions of the PRACHs corresponding to the SSBs in different subsets of the second SSB set, a length of the first field is a minimum integer greater than log₂(M), and M is a type of a quantity of slots included in a time interval between the first PRACH and the second PRACH.

When the second field indicates subsets of the N SSBs, a length of the second field is a minimum integer greater than (P-1)*log₂(N), and P is a quantity of subsets.

When the third field indicates the quantities of ROs corresponding to the SSBs in different subsets of the second SSB set, a length of the third field is a minimum integer greater than log₂(O), and O is a type of a cardinality of a quantity of ROs.

When the fourth field indicates the maximum quantities of repeated sending times corresponding to the SSBs in different subsets of the second SSB set, a length of the fourth field is a minimum integer greater than log₂(R), and R is a type of a cardinality of quantities of repeated sending times corresponding to the SSBs in different subsets.

When the fifth field indicates the division formats of the preamble sequences of the SSBs in different subsets of the second SSB set, a length of the fifth field is a minimum integer greater than log₂(T), and T is a type of division of the preamble sequences of the SSBs in different subsets.

With reference to the second aspect, in some implementations of the second aspect, the indication information further indicates a threshold of an RSRP, and different thresholds of the RSRP correspond to different repetition quantities.

With reference to the second aspect, in some implementations of the second aspect, that the network device receives a preamble sequence on the PRACH resource includes: The network device receives the preamble sequence on the PRACH resource based on a repetition quantity corresponding to a first beam, where the first beam is determined from N beams, an RSRP corresponding to the first beam is a largest RSRP in N RSRPs, a repetition quantity corresponding to the first beam is determined based on the RSRP corresponding to the first beam and an RSRP threshold set, and the RSRP threshold set corresponds to an SSB subset corresponding to the first beam.

It should be understood that the second aspect is a method on a network apparatus side corresponding to the first aspect. Related explanations, supplements, and descriptions of beneficial effects of the first aspect are also applicable to the second aspect. Details are not described herein again.

According to a third aspect, an embodiment of this application provides a communication method. The method may be performed by a terminal device, or may be performed by a chip or a circuit used in the terminal device. This is not limited in this application. For ease of description, the following uses an example in which the method is performed by the terminal device for description. The method may include: The terminal device receives N SSBs, where N is a positive integer greater than or equal to 2; the terminal device receives indication information, where the indication information indicates PRACH resources of M SSBs, M is a positive integer less than or equal to N, D SSBs belong to the N SSBs, the D SSBs belong to Q mutually exclusive non-zero SSB subsets, Q is a positive integer greater than or equal to 2, the Q mutually exclusive non-zero SSB subsets include a first SSB subset and a second SSB subset, the first SSB subset includes a fifth SSB, the second SSB subset includes a sixth SSB, and a quantity of PRACH resources associated with the fifth SSB is different from a quantity of PRACH resources associated with the sixth SSB, or any one of the D SSBs is associated with a same quantity of PRACH resources; and the terminal device sends a preamble sequence on the PRACH resource based on the indication information.

In the method, a network device indicates, to the terminal device, a PRACH resource associated with a to-be-enhanced SSB, and beams with different coverage capabilities correspond to different PRACH resources, so that resource utilization can be improved, and communication efficiency can be improved.

With reference to the third aspect, in some implementations of the third aspect, the PRACH resource includes an RO resource and/or a code resource, and that a quantity of PRACH resources associated with the fifth SSB is different from a quantity of PRACH resources associated with the sixth SSB includes: A quantity of RO resources associated with the fifth SSB is different from a quantity of RO resources associated with the sixth SSB.

With reference to the third aspect, in some implementations of the third aspect, that the indication information indicates the PRACH resources includes: The indication information indicates a first parameter, and the first parameter includes at least one of the following: an SSB in a second SSB set, a subset to which the SSB in the second SSB set belongs, quantities of ROs corresponding to SSBs in different subsets of the second SSB set, time-frequency positions of PRACHs corresponding to the SSBs in different subsets of the second SSB set, maximum quantities of repeated sending times corresponding to the SSBs in different subsets of the second SSB set, division formats of preamble sequences corresponding to the SSBs in different subsets of the second SSB set, a quantity of ROs corresponding to the SSB in the second SSB set, a time-frequency position of a PRACH corresponding to the SSB in the second SSB set, a maximum quantity of repeated sending times corresponding to the SSB in the second SSB set, or a division format of a preamble sequence corresponding to the SSB in the second SSB set.

With reference to the third aspect, in some implementations of the third aspect, the indication information includes at least one of a first field, a second field, a third field, a fourth field, and a fifth field.

The first field indicates the time-frequency positions of the PRACHs corresponding to the SSBs in different subsets of the second SSB set, a length of the first field is a minimum integer greater than log₂(M), and M is a type of a quantity of slots included in a time interval between the first PRACH and the second PRACH.

When the second field indicates subsets of the N SSBs, a length of the second field is a minimum integer greater than (P-1)*log₂(N), and P is a quantity of subsets.

When the third field indicates the quantities of ROs corresponding to the SSBs in different subsets of the second SSB set, a length of the third field is a minimum integer greater than log₂(O), and O is a type of a cardinality of a quantity of ROs.

When the fourth field indicates the maximum quantities of repeated sending times corresponding to the SSBs in different subsets of the second SSB set, a length of the fourth field is a minimum integer greater than log₂(R), and R is a type of a cardinality of quantities of repeated sending times corresponding to the SSBs in different subsets.

When the fifth field indicates the division formats of the preamble sequences of the SSBs in different subsets of the second SSB set, a length of the fifth field is a minimum integer greater than log₂(T), and T is a type of division of the preamble sequences of the SSBs in different subsets.

With reference to the third aspect, in some implementations of the third aspect, the indication information further indicates an RSRP threshold corresponding to the first SSB subset and/or an RSRP threshold corresponding to the second SSB subset, and different RSRP thresholds correspond to different repetition quantities.

With reference to the third aspect, in some implementations of the third aspect, the terminal device measures N RSRPs corresponding to the N SSBs, and determines a first beam from N beams, where an RSRP corresponding to the first beam is a largest RSRP in the N RSRPs; the terminal device determines an SSB subset corresponding to the first beam, and determines an RSRP threshold set corresponding to the SSB subset corresponding to the first beam; and the terminal device determines, based on the RSRP corresponding to the first beam and the RSRP threshold set, a repetition quantity corresponding to the first beam. That the terminal device sends a preamble sequence on the PRACH resource based on the indication information includes: The terminal device sends the preamble sequence on the PRACH resource based on the repetition quantity corresponding to the first beam.

It should be understood that related explanations, supplements, and descriptions of beneficial effects of the first aspect are also applicable to the third aspect. Details are not described herein again.

According to a fourth aspect, an embodiment of this application provides a communication method. The method may be performed by a network device, or may be performed by a chip or a circuit used in the network device. This is not limited in this application. For ease of description, the following uses an example in which the method is performed by the network device for description. The method may include: The network device sends N SSBs, where N is a positive integer greater than or equal to 2; the network device sends indication information, where the indication information indicates PRACH resources of D SSBs, D is a positive integer less than or equal to N, the D SSBs belong to the N SSBs, M SSBs belong to Q mutually exclusive non-zero SSB subsets, Q is a positive integer greater than or equal to 2, the Q mutually exclusive non-zero SSB subsets include a first SSB subset and a second SSB subset, the first SSB subset includes a fifth SSB, the second SSB subset includes a sixth SSB, and a quantity of PRACH resources associated with the fifth SSB is different from a quantity of PRACH resources associated with the sixth SSB, or any one of the D SSBs is associated with a same quantity of PRACH resources; and the network device receives a preamble sequence on the PRACH resource.

With reference to the fourth aspect, in some implementations of the fourth aspect, the PRACH resource includes an RO resource and/or a code resource, and that a quantity of PRACH resources associated with the fifth SSB is different from a quantity of PRACH resources associated with the sixth SSB includes: A quantity of RO resources associated with the fifth SSB is different from a quantity of RO resources associated with the sixth SSB.

With reference to the fourth aspect, in some implementations of the fourth aspect, that the indication information indicates the PRACH resources includes: The indication information indicates a first parameter, and the first parameter includes at least one of the following: an SSB in a second SSB set, a subset to which the SSB in the second SSB set belongs, quantities of ROs corresponding to SSBs in different subsets of the second SSB set, time-frequency positions of PRACHs corresponding to the SSBs in different subsets of the second SSB set, maximum quantities of repeated sending times corresponding to the SSBs in different subsets of the second SSB set, division formats of preamble sequences corresponding to the SSBs in different subsets of the second SSB set, a quantity of ROs corresponding to the SSB in the second SSB set, a time-frequency position of a PRACH corresponding to the SSB in the second SSB set, a maximum quantity of repeated sending times corresponding to the SSB in the second SSB set, or a division format of a preamble sequence corresponding to the SSB in the second SSB set.

With reference to the fourth aspect, in some implementations of the fourth aspect, the indication information includes at least one of a first field, a second field, a third field, a fourth field, and a fifth field.

The first field indicates the time-frequency positions of the PRACHs corresponding to the SSBs in different subsets of the second SSB set, a length of the first field is a minimum integer greater than log₂(M), and M is a type of a quantity of slots included in a time interval between the first PRACH and the second PRACH.

When the second field indicates subsets of the N SSBs, a length of the second field is a minimum integer greater than (P-1)*log₂(N), and P is a quantity of subsets.

When the third field indicates the quantities of ROs corresponding to the SSBs in different subsets of the second SSB set, a length of the third field is a minimum integer greater than log₂(O), and O is a type of a cardinality of a quantity of ROs.

When the fourth field indicates the maximum quantities of repeated sending times corresponding to the SSBs in different subsets of the second SSB set, a length of the fourth field is a minimum integer greater than log₂(R), and R is a type of a cardinality of quantities of repeated sending times corresponding to the SSBs in different subsets.

When the fifth field indicates the division formats of the preamble sequences of the SSBs in different subsets of the second SSB set, a length of the fifth field is a minimum integer greater than log₂(T), and T is a type of division of the preamble sequences of the SSBs in different subsets.

With reference to the fourth aspect, in some implementations of the fourth aspect, the indication information further indicates an RSRP threshold corresponding to the first SSB subset and/or an RSRP threshold corresponding to the second SSB subset, and different RSRP thresholds correspond to different repetition quantities.

With reference to the fourth aspect, in some implementations of the fourth aspect, that the network device receives a preamble sequence on the PRACH resource includes: The network device receives the preamble sequence on the PRACH resource based on a repetition quantity corresponding to a first beam, where the first beam is determined from N beams, an RSRP corresponding to the first beam is a largest RSRP in N RSRPs, a repetition quantity corresponding to the first beam is determined based on the RSRP corresponding to the first beam and an RSRP threshold set, and the RSRP threshold set corresponds to an SSB subset corresponding to the first beam.

It should be understood that the fourth aspect is a method on a network device side corresponding to the third aspect. Related explanations, supplements, and descriptions of beneficial effects of the third aspect are also applicable to the fourth aspect. Details are not described herein again.

According to a fifth aspect, an embodiment of this application provides a communication apparatus. The apparatus includes a processing module and a transceiver module. The transceiver module is configured to receive N SSBs, where N is a positive integer greater than or equal to 2. The transceiver module is further configured to receive indication information, where the indication information indicates a PRACH resource, the PRACH resource includes a first PRACH resource and a second PRACH resource, the N SSBs include a first SSB and a second SSB, the first SSB and the second SSB are associated with the first PRACH resource, and the second SSB is associated with the second PRACH resource, or a quantity of PRACH resources associated with the first SSB is different from a quantity of PRACH resources associated with the second SSB. The transceiver module is further configured to send a preamble sequence on the PRACH resource based on the indication information.

With reference to the fifth aspect, in some implementations of the fifth aspect, the PRACH resource includes an RO resource and/or a code resource, and that a quantity of PRACH resources associated with the first SSB is different from a quantity of PRACH resources associated with the second SSB includes: A quantity of RO resources associated with the first SSB is different from a quantity of RO resources associated with the second SSB.

With reference to the fifth aspect, in some implementations of the fifth aspect, the first SSB belongs to a first SSB set, the second SSB belongs to a second SSB set, the second SSB set includes D SSBs, and M is a positive integer greater than or equal to 1. The D SSBs belong to Q mutually exclusive non-zero SSB subsets, Q is a positive integer greater than or equal to 2, the Q mutually exclusive non-zero SSB subsets include a first SSB subset and a second SSB subset, the first SSB subset includes a third SSB, the second SSB subset includes a fourth SSB, and a quantity of ROs associated with the third SSB is different from a quantity of ROs associated with the fourth SSB.

Alternatively, any one of the D SSBs is associated with a same quantity of ROs.

With reference to the fifth aspect, in some implementations of the fifth aspect, a quantity of RSRP thresholds corresponding to the first SSB subset is different from a quantity of RSRP thresholds corresponding to the second SSB subset.

With reference to the fifth aspect, in some implementations of the fifth aspect, that the indication information indicates a PRACH resource includes: The indication information indicates a first parameter, and the first parameter includes at least one of the following: an SSB in the second SSB set, a subset to which the SSB in the second SSB set belongs, quantities of ROs corresponding to SSBs in different subsets of the second SSB set, time-frequency positions of PRACHs corresponding to the SSBs in different subsets of the second SSB set, maximum quantities of repeated sending times corresponding to the SSBs in different subsets of the second SSB set, division formats of preamble sequences corresponding to the SSBs in different subsets of the second SSB set, a quantity of ROs corresponding to the SSB in the second SSB set, a time-frequency position of a PRACH corresponding to the SSB in the second SSB set, a maximum quantity of repeated sending times corresponding to the SSB in the second SSB set, or a division format of a preamble sequence corresponding to the SSB in the second SSB set.

With reference to the fifth aspect, in some implementations of the fifth aspect, the indication information includes at least one of a first field, a second field, a third field, a fourth field, and a fifth field.

The first field indicates the time-frequency positions of the PRACHs corresponding to the SSBs in different subsets of the second SSB set, a length of the first field is a minimum integer greater than log₂(M), and M is a type of a quantity of slots included in a time interval between the first PRACH and the second PRACH.

When the second field indicates subsets of the N SSBs, a length of the second field is a minimum integer greater than (P-1)*log₂(N), and P is a quantity of subsets.

When the third field indicates the quantities of ROs corresponding to the SSBs in different subsets of the second SSB set, a length of the third field is a minimum integer greater than log₂(O), and O is a type of a cardinality of a quantity of ROs.

When the fourth field indicates the maximum quantities of repeated sending times corresponding to the SSBs in different subsets of the second SSB set, a length of the fourth field is a minimum integer greater than log₂(R), and R is a type of a cardinality of quantities of repeated sending times corresponding to the SSBs in different subsets.

When the fifth field indicates the division formats of the preamble sequences of the SSBs in different subsets of the second SSB set, a length of the fifth field is a minimum integer greater than log₂(T), and T is a type of division of the preamble sequences of the SSBs in different subsets.

With reference to the fifth aspect, in some implementations of the fifth aspect, the indication information further indicates an RSRP threshold corresponding to the first SSB subset and/or an RSRP threshold corresponding to the second SSB subset, and different RSRP thresholds correspond to different repetition quantities.

With reference to the fifth aspect, in some implementations of the fifth aspect, the processing module is configured to: measure N RSRPs corresponding to the N SSBs, and determine a first beam from N beams, where an RSRP corresponding to the first beam is a largest RSRP in the N RSRPs; the processing module is further configured to: determine an SSB subset corresponding to the first beam, and determine an RSRP threshold set corresponding to the SSB subset corresponding to the first beam; and the processing module is further configured to: determine, based on the RSRP corresponding to the first beam and the RSRP threshold set, a repetition quantity corresponding to the first beam. Based on the indication information, the transceiver module is specifically configured to send the preamble sequence on the PRACH resource based on the repetition quantity corresponding to the first beam.

It should be understood that the fifth aspect is an implementation on an apparatus side corresponding to the first aspect. Related explanations, supplements, possible implementations, and descriptions of beneficial effects of the first aspect are also applicable to the fifth aspect. Details are not described herein again.

According to a sixth aspect, an embodiment of this application provides a communication apparatus. The apparatus includes a transceiver module and a processing module. The transceiver module is configured to send N SSBs, where N is a positive integer greater than or equal to 2. The transceiver module is configured to send indication information, where the indication information indicates a PRACH resource, the PRACH resource includes a first PRACH resource and a second PRACH resource, the N SSBs include a first SSB and a second SSB, the first SSB and the second SSB are associated with the first PRACH resource, the second SSB is associated with the second PRACH resource, and a quantity of PRACHs associated with the first SSB is different from a quantity of PRACHs associated with the second SSB. The transceiver module is further configured to receive a preamble sequence on the PRACH resource.

With reference to the sixth aspect, in some implementations of the sixth aspect, the PRACH resource includes an RO resource and/or a code resource, and that a quantity of PRACH resources associated with the first SSB is different from a quantity of PRACH resources associated with the second SSB includes: A quantity of RO resources associated with the first SSB is different from a quantity of RO resources associated with the second SSB.

With reference to the sixth aspect, in some implementations of the sixth aspect, the first SSB belongs to a first SSB set, the second SSB belongs to a second SSB set, the second SSB set includes D SSBs, and D is a positive integer greater than or equal to 1.

The D SSBs belong to Q mutually exclusive non-zero SSB subsets, Q is a positive integer greater than or equal to 2, the Q mutually exclusive non-zero SSB subsets include a first SSB subset and a second SSB subset, the first SSB subset includes a third SSB, the second SSB subset includes a fourth SSB, and a quantity of ROs associated with the third SSB is different from a quantity of ROs associated with the fourth SSB.

Alternatively, any one of the D SSBs is associated with a same quantity of ROs.

With reference to the sixth aspect, in some implementations of the sixth aspect, a quantity of RSRP thresholds corresponding to the first SSB subset is different from a quantity of RSRP thresholds corresponding to the second SSB subset.

With reference to the sixth aspect, in some implementations of the sixth aspect, that the indication information indicates a PRACH resource includes:
The indication information indicates a first parameter, and the first parameter includes at least one of the following: an SSB in the second SSB set, a subset to which the SSB in the second SSB set belongs, quantities of ROs corresponding to SSBs in different subsets of the second SSB set, time-frequency positions of PRACHs corresponding to the SSBs in different subsets of the second SSB set, maximum quantities of repeated sending times corresponding to the SSBs in different subsets of the second SSB set, division formats of preamble sequences corresponding to the SSBs in different subsets of the second SSB set, a quantity of ROs corresponding to the SSB in the second SSB set, a time-frequency position of a PRACH corresponding to the SSB in the second SSB set, a maximum quantity of repeated sending times corresponding to the SSB in the second SSB set, or a division format of a preamble sequence corresponding to the SSB in the second SSB set.

With reference to the sixth aspect, in some implementations of the sixth aspect, the indication information includes at least one of a first field, a second field, a third field, a fourth field, and a fifth field.

The first field indicates the time-frequency positions of the PRACHs corresponding to the SSBs in different subsets of the second SSB set, a length of the first field is a minimum integer greater than log₂(M), and M is a type of a quantity of slots included in a time interval between the first PRACH and the second PRACH.

When the second field indicates subsets of the N SSBs, a length of the second field is a minimum integer greater than (P-1)*log₂(N), and P is a quantity of subsets.

When the third field indicates the quantities of ROs corresponding to the SSBs in different subsets of the second SSB set, a length of the third field is a minimum integer greater than log₂(O), and O is a type of a cardinality of a quantity of ROs.

When the fourth field indicates the maximum quantities of repeated sending times corresponding to the SSBs in different subsets of the second SSB set, a length of the fourth field is a minimum integer greater than log₂(R), and R is a type of a cardinality of quantities of repeated sending times corresponding to the SSBs in different subsets.

When the fifth field indicates the division formats of the preamble sequences of the SSBs in different subsets of the second SSB set, a length of the fifth field is a minimum integer greater than log₂(T), and T is a type of division of the preamble sequences of the SSBs in different subsets.

With reference to the sixth aspect, in some implementations of the sixth aspect, the indication information further indicates a threshold of an RSRP, and different thresholds of the RSRP correspond to different repetition quantities.

With reference to the sixth aspect, in some implementations of the sixth aspect, the transceiver module is specifically configured to receive the preamble sequence on the PRACH resource based on a repetition quantity corresponding to a first beam, where the first beam is determined from N beams, an RSRP corresponding to the first beam is a largest RSRP in N RSRPs, a repetition quantity corresponding to the first beam is determined based on the RSRP corresponding to the first beam and an RSRP threshold set, and the RSRP threshold set corresponds to an SSB subset corresponding to the first beam.

It should be understood that the sixth aspect is an implementation on an apparatus side corresponding to the second aspect. Related explanations, supplements, possible implementations, and descriptions of beneficial effects of the second aspect are also applicable to the sixth aspect. Details are not described herein again.

According to a seventh aspect, an embodiment of this application provides a communication apparatus. The apparatus includes a processing module and a transceiver module. The transceiver module is configured to receive N SSBs, where N is a positive integer greater than or equal to 2. The transceiver module is configured to receive indication information, where the indication information indicates PRACH resources of D SSBs, M is a positive integer less than or equal to N, the D SSBs belong to the N SSBs, the D SSBs belong to Q mutually exclusive non-zero SSB subsets, Q is a positive integer greater than or equal to 2, the Q mutually exclusive non-zero SSB subsets include a first SSB subset and a second SSB subset, the first SSB subset includes a fifth SSB, the second SSB subset includes a sixth SSB, and a quantity of PRACH resources associated with the fifth SSB is different from a quantity of PRACH resources associated with the sixth SSB, or any one of the D SSBs is associated with a same quantity of PRACH resources. The transceiver module is further configured to send a preamble sequence on the PRACH resource based on the indication information.

With reference to the seventh aspect, in some implementations of the seventh aspect, the PRACH resource includes an RO resource and/or a code resource, and that a quantity of PRACH resources associated with the fifth SSB is different from a quantity of PRACH resources associated with the sixth SSB includes: A quantity of RO resources associated with the fifth SSB is different from a quantity of RO resources associated with the sixth SSB.

With reference to the seventh aspect, in some implementations of the seventh aspect, that the indication information indicates the PRACH resources includes: The indication information indicates a first parameter, and the first parameter includes at least one of the following: an SSB in a second SSB set, a subset to which the SSB in the second SSB set belongs, quantities of ROs corresponding to SSBs in different subsets of the second SSB set, time-frequency positions of PRACHs corresponding to the SSBs in different subsets of the second SSB set, maximum quantities of repeated sending times corresponding to the SSBs in different subsets of the second SSB set, division formats of preamble sequences corresponding to the SSBs in different subsets of the second SSB set, a quantity of ROs corresponding to the SSB in the second SSB set, a time-frequency position of a PRACH corresponding to the SSB in the second SSB set, a maximum quantity of repeated sending times corresponding to the SSB in the second SSB set, or a division format of a preamble sequence corresponding to the SSB in the second SSB set.

With reference to the seventh aspect, in some implementations of the seventh aspect, the indication information includes at least one of a first field, a second field, a third field, a fourth field, and a fifth field.

The first field indicates the time-frequency positions of the PRACHs corresponding to the SSBs in different subsets of the second SSB set, a length of the first field is a minimum integer greater than log₂(M), and M is a type of a quantity of slots included in a time interval between the first PRACH and the second PRACH.

When the second field indicates subsets of the N SSBs, a length of the second field is a minimum integer greater than (P-1)*log₂(N), and P is a quantity of subsets.

When the third field indicates the quantities of ROs corresponding to the SSBs in different subsets of the second SSB set, a length of the third field is a minimum integer greater than log₂(O), and O is a type of a cardinality of a quantity of ROs.

When the fourth field indicates the maximum quantities of repeated sending times corresponding to the SSBs in different subsets of the second SSB set, a length of the fourth field is a minimum integer greater than log₂(R), and R is a type of a cardinality of quantities of repeated sending times corresponding to the SSBs in different subsets.

When the fifth field indicates the division formats of the preamble sequences of the SSBs in different subsets of the second SSB set, a length of the fifth field is a minimum integer greater than log₂(T), and T is a type of division of the preamble sequences of the SSBs in different subsets.

With reference to the seventh aspect, in some implementations of the seventh aspect, the indication information further indicates an RSRP threshold corresponding to the first SSB subset and/or an RSRP threshold corresponding to the second SSB subset, and different RSRP thresholds correspond to different repetition quantities.

With reference to the seventh aspect, in some implementations of the seventh aspect, the processing module is configured to: measure N RSRPs corresponding to the N SSBs, and determine a first beam from N beams, where an RSRP corresponding to the first beam is a largest RSRP in the N RSRPs; the processing module is configured to: determine an SSB subset corresponding to the first beam, and determine an RSRP threshold set corresponding to the SSB subset corresponding to the first beam; and the processing module is further configured to determine, based on the RSRP corresponding to the first beam and the RSRP threshold set, a repetition quantity corresponding to the first beam. The transceiver module is specifically configured to send the preamble sequence on the PRACH resource based on the repetition quantity corresponding to the first beam.

It should be understood that the seventh aspect is an implementation on an apparatus side corresponding to the third aspect. Related explanations, supplements, possible implementations, and descriptions of beneficial effects of the third aspect are also applicable to the seventh aspect. Details are not described herein again.

According to an eighth aspect, an embodiment of this application provides a communication apparatus. The apparatus includes a transceiver module and a processing module. The transceiver module is configured to send N SSBs, where N is a positive integer greater than or equal to 2. The transceiver module is configured to send indication information, where the indication information indicates PRACH resources of D SSBs, D is a positive integer less than or equal to N, the D SSBs belong to the N SSBs, M SSBs belong to Q mutually exclusive non-zero SSB subsets, Q is a positive integer greater than or equal to 2, the Q mutually exclusive non-zero SSB subsets include a first SSB subset and a second SSB subset, the first SSB subset includes a fifth SSB, the second SSB subset includes a sixth SSB, and a quantity of PRACH resources associated with the fifth SSB is different from a quantity of PRACH resources associated with the sixth SSB, or any one of the D SSBs is associated with a same quantity of PRACH resources. The transceiver module is further configured to receive a preamble sequence on the PRACH resource.

With reference to the eighth aspect, in some implementations of the eighth aspect, the PRACH resource includes an RO resource and/or a code resource, and that a quantity of PRACH resources associated with the fifth SSB is different from a quantity of PRACH resources associated with the sixth SSB includes: A quantity of RO resources associated with the fifth SSB is different from a quantity of RO resources associated with the sixth SSB.

With reference to the eighth aspect, in some implementations of the eighth aspect, that the indication information indicates the PRACH resources includes: The indication information indicates a first parameter, and the first parameter includes at least one of the following: an SSB in a second SSB set, a subset to which the SSB in the second SSB set belongs, quantities of ROs corresponding to SSBs in different subsets of the second SSB set, time-frequency positions of PRACHs corresponding to the SSBs in different subsets of the second SSB set, maximum quantities of repeated sending times corresponding to the SSBs in different subsets of the second SSB set, division formats of preamble sequences corresponding to the SSBs in different subsets of the second SSB set, a quantity of ROs corresponding to the SSB in the second SSB set, a time-frequency position of a PRACH corresponding to the SSB in the second SSB set, a maximum quantity of repeated sending times corresponding to the SSB in the second SSB set, or a division format of a preamble sequence corresponding to the SSB in the second SSB set.

With reference to the eighth aspect, in some implementations of the eighth aspect, the indication information includes at least one of a first field, a second field, a third field, a fourth field, and a fifth field.

The first field indicates the time-frequency positions of the PRACHs corresponding to the SSBs in different subsets of the second SSB set, a length of the first field is a minimum integer greater than log₂(M), and M is a type of a quantity of slots included in a time interval between the first PRACH and the second PRACH.

When the second field indicates subsets of the N SSBs, a length of the second field is a minimum integer greater than (P-1)*log₂(N), and P is a quantity of subsets.

When the third field indicates the quantities of ROs corresponding to the SSBs in different subsets of the second SSB set, a length of the third field is a minimum integer greater than log₂(O), and O is a type of a cardinality of a quantity of ROs.

When the fourth field indicates the maximum quantities of repeated sending times corresponding to the SSBs in different subsets of the second SSB set, a length of the fourth field is a minimum integer greater than log₂(R), and R is a type of a cardinality of quantities of repeated sending times corresponding to the SSBs in different subsets.

When the fifth field indicates the division formats of the preamble sequences of the SSBs in different subsets of the second SSB set, a length of the fifth field is a minimum integer greater than log₂(T), and T is a type of division of the preamble sequences of the SSBs in different subsets.

With reference to the eighth aspect, in some implementations of the eighth aspect, the indication information further indicates an RSRP threshold corresponding to the first SSB subset and/or an RSRP threshold corresponding to the second SSB subset, and different RSRP thresholds correspond to different repetition quantities.

With reference to the eighth aspect, in some implementations of the eighth aspect, the transceiver module is specifically configured to receive the preamble sequence on the PRACH resource based on a repetition quantity corresponding to a first beam, where the first beam is determined from N beams, an RSRP corresponding to the first beam is a largest RSRP in N RSRPs, a repetition quantity corresponding to the first beam is determined based on the RSRP corresponding to the first beam and an RSRP threshold set, and the RSRP threshold set corresponds to an SSB subset corresponding to the first beam.

It should be understood that the eighth aspect is an implementation on an apparatus side corresponding to the fourth aspect. Related explanations, supplements, possible implementations, and descriptions of beneficial effects of the fourth aspect are also applicable to the eighth aspect. Details are not described herein again.

According to a ninth aspect, an embodiment of this application provides a communication apparatus, including an interface circuit and a processor. The interface circuit is configured to implement a function of the transceiver module in the fifth aspect or the seventh aspect, and the processor is configured to implement a function of the processing module in the fifth aspect or the seventh aspect.

According to a tenth aspect, an embodiment of this application provides a communication apparatus, including an interface circuit and a processor. The interface circuit is configured to implement a function of the transceiver module in the sixth aspect or the eighth aspect, and the processor is configured to implement a function of the processing module in the sixth aspect or the eighth aspect.

According to an eleventh aspect, an embodiment of this application provides a computer-readable medium. The computer-readable medium stores program code to be executed by a terminal apparatus, and the program code includes instructions for performing the method in the first aspect or the third aspect, any one of the possible manners of the first aspect or the third aspect, or all the possible manners of the first aspect or the third aspect.

According to a twelfth aspect, an embodiment of this application provides a computer-readable medium. The computer-readable medium stores program code to be executed by a network apparatus, and the program code includes instructions for performing the method in the second aspect or the fourth aspect, any one of the possible manners of the second aspect or the fourth aspect, or all the possible manners of the second aspect or the fourth aspect.

According to a thirteenth aspect, a computer program product storing computer-readable instructions is provided. When the computer-readable instructions are run on a computer, the computer is enabled to perform the method in the first aspect or the third aspect, any one of the possible manners of the first aspect or the third aspect, or all the possible manners of the first aspect or the third aspect.

According to a fourteenth aspect, a computer program product storing computer-readable instructions is provided. When the computer-readable instructions are run on a computer, the computer is enabled to perform the method in the second aspect or the fourth aspect, any one of the possible manners of the second aspect or the fourth aspect, or all the possible manners of the second aspect or the fourth aspect.

According to a fifteenth aspect, a communication system is provided. The communication system includes an apparatus that has a function of implementing the method in the first aspect, any one of the possible manners of the first aspect, or all the possible manners of the first aspect and various possible designs and an apparatus that has a function of implementing the method in the second aspect, any one of the possible manners of the second aspect, or all the possible manners of the second aspect and various possible designs.

According to a sixteenth aspect, a communication system is provided. The communication system includes an apparatus that has a function of implementing the method in the third aspect, any one of the possible manners of the third aspect, or all the possible manners of the third aspect and various possible designs and an apparatus that has a function of implementing the method in the fourth aspect, any one of the possible manners of the fourth aspect, or all the possible manners of the fourth aspect and various possible designs.

According to a seventeenth aspect, a processor is provided. The processor is configured to be coupled to a memory, and is configured to perform the first aspect or the third aspect, any one of the possible manners of the first aspect or the third aspect, or all the possible manners of the first aspect or the third aspect.

According to an eighteenth aspect, a processor is provided. The processor is configured to be coupled to a memory, and is configured to perform the method in the second aspect or the fourth aspect, any one of the possible manners of the second aspect or the fourth aspect, or all the possible manners of the second aspect or the fourth aspect.

According to a nineteenth aspect, a chip system is provided. The chip system includes a processor, and may further include a memory, configured to execute a computer program or instructions stored in the memory, so that the chip system implements the method in any one of the first aspect or the third aspect, or any possible implementation of any one of the first aspect or the third aspect. The chip system may include a chip, or may include a chip and another discrete component.

According to a twentieth aspect, a chip system is provided. The chip system includes a processor, and may further include a memory, configured to execute a computer program or instructions stored in the memory, so that the chip system implements the method in any one of the second aspect or the fourth aspect, or any possible implementation of any one of the second aspect or the fourth aspect. The chip system may include a chip, or may include a chip and another discrete component.

### BRIEF DESCRIPTION OF DRAWINGS

FIG. 1 shows a communication system to which an embodiment of this application is applicable;
FIG. 2 is a diagram of a contention-based random access procedure;
FIG. 3 is a diagram of a structure of an SSB;
FIG. 4 is a diagram of a slot structure;
FIG. 5 is a diagram of a time domain position of a PRACH;
FIG. 6 is a diagram of an association relationship between an RO and an SSB;
FIG. 7 is a diagram of a frequency domain position of a PRACH;
FIG. 8 is a diagram of a mapping periodicity between an RO and an SSB;
FIG. 9 is a diagram of a cell beam coverage level;
FIG. 10 is a diagram of a communication method according to an embodiment of this application;
FIG. 11 is a diagram of SSB grouping according to an embodiment of this application;
FIG. 12 is a diagram of a mapping relationship between quantities of ROs and RO cardinalities of different SSB groups according to an embodiment of this application;
FIG. 13 is a diagram of a PARCH resource according to an embodiment of this application;
FIG. 14 is a diagram of a mapping relationship between maximum repetition quantities and repetition cardinalities of different SSB groups according to an embodiment of this application;
FIG. 15 is a diagram of a mapping relationship between preamble sequence division and different quantities of repeated sending times of different SSB groups according to an embodiment of this application;
FIG. 16 is a diagram of PRACH resource configurations and use manners of ROs for repeated sending of different SSB groups according to an embodiment of this application;
FIG. 17 is a block diagram of a communication apparatus according to an embodiment of this application; and
FIG. 18 is a block diagram of another communication apparatus according to an embodiment of this application.

### DESCRIPTION OF EMBODIMENTS

The following describes technical solutions in embodiments of this application with reference to the accompanying drawings.

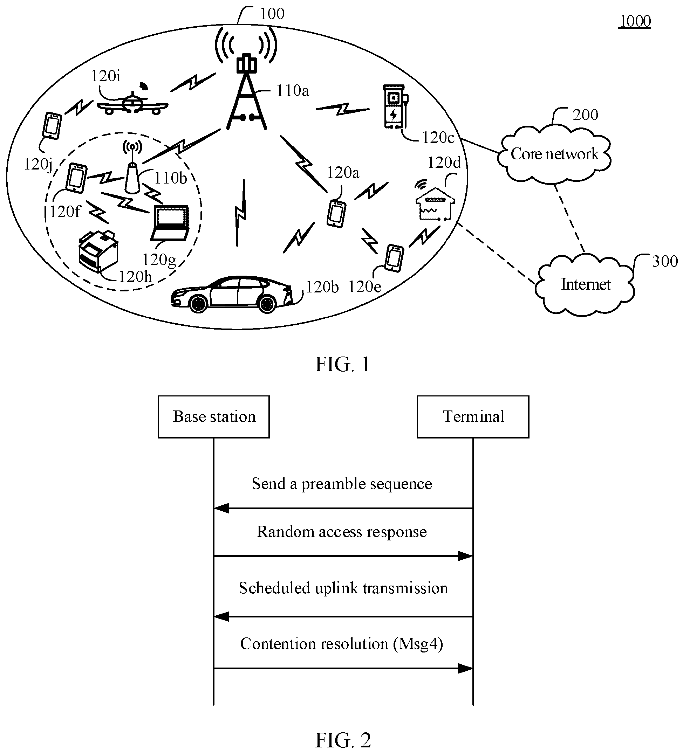

FIG. 1 is a diagram of an architecture of a communication system 1000 to which an embodiment of this application is applied. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, or functions of the core network device and logical functions of the radio access network device are integrated into a same physical device, or some functions of the core network device and some functions of the radio access network device are integrated into one physical device. A wired or wireless manner may be used for a connection between terminals and between radio access network devices. FIG. 1 is only a diagram. The communication system may further include other network devices, for example, may further include a wireless relay device and a wireless backhaul device, which are not shown in FIG. 1.

The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or a unit that implements some functions of a base station, for example, may be a central unit (central unit, CU), or may be a distributed unit (distributed unit, DU). The CU herein implements functions of a radio resource control protocol and a packet data convergence protocol (packet data convergence protocol, PDCP) of the base station, and may further implement functions of a service data adaptation protocol (service data adaptation protocol, SDAP). The DU completes functions of a radio link control layer and a medium access control (medium access control, MAC) layer of the base station, and may further complete functions of a part or all of a physical layer. For specific descriptions of the foregoing protocol layers, reference may be made to technical specifications related to a 3rd generation partnership project (3rd generation partnership project, 3GPP). The radio access network device may be a macro base station (like 110a in FIG. 1), may be a micro base station or an indoor base station (like 110b in FIG. 1), may be a relay node or a donor node, or the like. A specific technology and a specific device form used by the radio access network device are not limited in embodiments of this application. For ease of description, the following provides descriptions by using an example in which the radio access network device is a base station.

The terminal may alternatively be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), an internet of things (internet of things, IOT), virtual reality, augmented reality, industrial control, automatic driving, telemedicine, a smart grid, smart furniture, a smart office, smart wearable, smart transportation, and a smart city. The terminal may be a mobile phone, a tablet computer, a computer having a wireless transceiver function, a wearable device, a vehicle, an uncrewed aerial vehicle, a helicopter, an airplane, a ship, a robot, a mechanical arm, a smart home device, or the like. A specific technology and a specific device form used by the terminal are not limited in embodiments of this application.

The base station and the terminal may be fixed or movable. The base station and the terminal may be deployed on land, including an indoor or outdoor device, a handheld device, or a vehicle-mounted device, may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 through 120i, the terminal 120i is a base station. However, for a base station 110a, 120i is a terminal. In other words, communication between 110a and 120i is performed according to a radio air interface protocol. Certainly, communication between 110a and 120i may alternatively be performed according to an interface protocol between base stations. In this case, for 110a, 120i is also a base station. Therefore, both the base station and the terminal may be collectively referred to as communication apparatuses, 110a and 110b each in FIG. 1 may be referred to as a communication apparatus having a function of a base station, and 120a to 120j each in FIG. 1 may be referred to as a communication apparatus having a function of a terminal.

Communication between the base station and the terminal, between the base station and the base station, or between the terminal and the terminal may be performed by using a licensed spectrum, may be performed by using an unlicensed spectrum, or may be performed by using both the licensed spectrum and the unlicensed spectrum. Communication may be performed by using a spectrum below 6 gigahertz (gigahertz, GHz), may be performed by using a spectrum above 6 GHz, or may be performed by using both the spectrum below 6 GHz and the spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as the smart grid, industrial control, smart transportation, and smart city. A function of the terminal may be performed by a module (for example, a chip or a modem) in the terminal, or may be performed by an apparatus including the function of the terminal.

The technical solutions provided in embodiments of this application are applied to wireless communication between communication devices. The wireless communication between communication devices may include wireless communication between a network device and a terminal, wireless communication between network devices, and wireless communication between terminal devices. In embodiments of this application, the term "wireless communication" may also be briefly referred to as "communication", and the term "communication" may also be described as "data transmission", "information transmission", or "transmission".

It may be understood that, in embodiments of this application, a physical uplink shared channel (physical uplink shared channel, PDSCH), a physical downlink control channel (physical downlink control channel, PDCCH), and a physical uplink shared channel (physical uplink shared channel, PUSCH) are merely examples of a downlink data channel, a downlink control channel, and an uplink data channel respectively. In different systems and different scenarios, the data channel and the control channel may have different names. This is not limited in embodiments of this application.

To facilitate understanding of the solutions in embodiments of this application, related concepts are explained.
1. Millimeter wave: The millimeter wave was initially defined as an electromagnetic wave whose wavelength ranges from 10 mm to 1 mm, and whose corresponding frequency ranges from 30 GHz to 300 GHz. Terahertz is defined as an electromagnetic wave whose frequency ranges from 0.1 THz to 10 THz (and whose wavelength ranges from 3 mm to 30 µm). In this way, there is a specific overlapping part between the two types of waves. Therefore, in the academic community, the latest definition of the two types of waves is that a millimeter-wave frequency band is 30 GHz to 100 GHz, and a Terahertz frequency band is 100 GHz to 10 THz. In the field of mobile communication, a wave in a frequency band of 24 GHz to 100 GHz is generally referred to as a 5G millimeter wave.
2. Millimeter-wave communication: The millimeter wave has abundant (76 GHz) spectrum bandwidth resources, a high frequency, a short wavelength, and good reflection performance. However, a path loss is large, a diffraction loss is large, a penetration loss is large, and absorption, scattering, and other phenomena of rain, snow, and ice in the atmosphere have great impact on a millimeter-wave signal. In general, a main challenge for the millimeter wave is that a propagation loss in space is greater than that for a sub-6 GHz frequency band (FR1: 410 MHz to 7125 MHz). In particular, performance of the millimeter wave is more vulnerable to impact of a surrounding environment and degrades due to a small quantity of paths, an insufficient diffraction capability, and an insufficient penetration capability.
   To overcome the foregoing challenge, a feature of a short wavelength of the millimeter wave may be used, a transmit physical antenna and a receive physical antenna are made very small, and a small antenna spacing is set, so that a large quantity of antennas are integrated in a same antenna array area. In comparison with the sub-6 GHz frequency band, a quantity of physical antennas that can be integrated in the millimeter wave will increase significantly, and there may be hundreds or thousands of antennas. Based on a feature that a millimeter-wave base station can be integrated with a large quantity of physical antennas, a high-gain and adjustable beam can be obtained through beamforming, and limited powers can be concentrated in a limited range for transmission, to improve signal coverage. It should be noted that although the beamforming improves a coverage capability of the millimeter wave to some extent, a propagation loss of a radio signal in each beam still maintains a feature of the millimeter wave.
3. Random access process: In a millimeter-wave communication system, a terminal device needs to achieve uplink synchronization through the random access process, and access a network for communication. Random access includes contention-based random access and non-contention-based random access. Non-contention-based access is usually performed when the terminal can successfully receive radio resource control (radio resource control, RRC) signaling.

The following describes a random access procedure by using a contention-based random access procedure as an example, and uses an example in which a base station is used as a network device for description.

As shown in FIG. 2, a detailed procedure of contention-based random access is described as follows:
Message 1 (Msg1) transmission: A terminal randomly selects, based on a received system message sent by a network device and an index of a selected synchronization signal and PBCH block (synchronization signal and PBCH block, SSB) (where each SSB corresponds to one millimeter-wave beam, the terminal selects a beam with a largest SSB received power from terminal beams, and this is referred to as the SSB index selected by the terminal), an RO in random access occasions (RACH occasions, ROs) (where the RO may be understood as a time-frequency resource used by a terminal device for random access, and the network device preconfigures an association relationship between the RO and the SSB index) associated with the SSB index, to send a preamble (preamble, namely, a Msg1). After determining the time-frequency resource, UE selects one preamble sequence from the selected RO (where a maximum of 64 preambles may be communicated on one RO, and the UE selects one of the 64 preamble sequences) for sending. Then, the terminal sends the preamble sequence to the network device, where the sequence is carried on a physical random access channel (physical random access channel, PRACH).
Message 2 (Msg2) transmission: After receiving the preamble, the network device allocates a time-frequency domain resource of a Msg2, scheduling information of a Msg3, and the like to the terminal. The Msg2 is also referred to as random access response (random access response, RAR) information. A RAR includes the scheduling information of the Msg3, that is, RAR UL grant information.

Msg3 (Msg3) transmission: The Msg3 is sent on the time-frequency resource specified by the Msg2 and carried on a PUSCH.

Message 4 (Msg4 transmission): A Msg4 is mainly used for contention resolution. When a plurality of terminals perform access at the same time, a terminal to be selected for random access needs to be determined.

4. Physical random access channel (physical random access channel, PRACH): The physical random access channel may be used to carry a preamble sequence, and a PRACH resource may include a time-frequency resource in the PRACH and/or a code resource carried on the PRACH, for example, the preamble sequence.

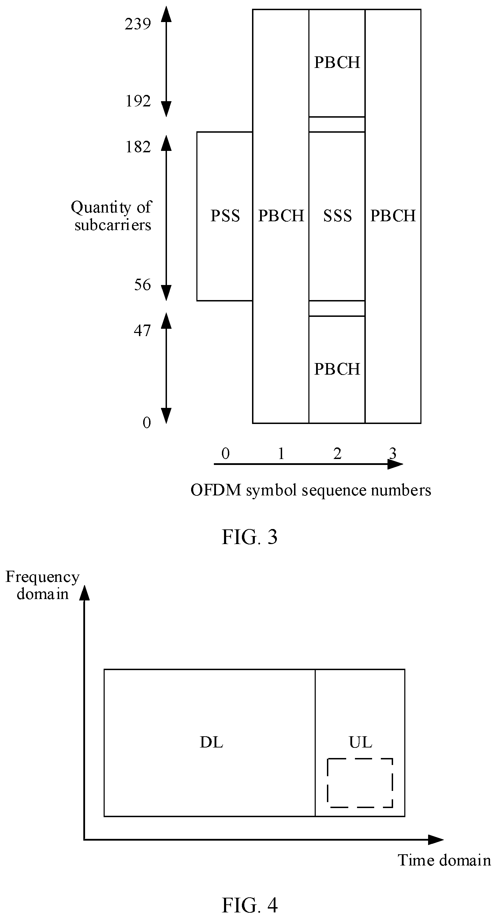

5. Synchronization signal and PBCH block (synchronization signal and PBCH block, SSB): The SSB is one of the most important pilot channels used in 5G, and may be used by UE to perform cell access, for example, cell search, beam measurement, beam selection, and beam recovery. In 5G, the SSB includes a synchronization signal and a broadcast signal. Specifically, the synchronization signal includes a primary synchronization signal (primary synchronization signal, PSS) and a secondary synchronization signal (secondary synchronization signal, SSS). The broadcast signal includes PBCH data (data) and a PBCH DMRS signal. Specifically, a time-frequency domain structure of the SSB is shown in FIG. 3. The SSB occupies four OFDM symbols in time domain, and occupies 20 RBs in frequency domain, that is, 240 subcarriers (subcarriers, SCs). An NR SSB mainly has two functions: (1) cell synchronization and obtaining of a main system message (master information block, MIB); and (2) beam training on a base station side.

In a random access process of millimeter-wave communication, if the terminal sends the preamble by using only one RO, because a millimeter-wave propagation loss is large and a millimeter wave is vulnerable to impact of an environment, when the terminal is far away from the network device and/or a surrounding environment is unfavorable to millimeter-wave transmission, there is a very high probability that a power of the preamble received by the network device is less than an expected value. Consequently, the terminal cannot reliably access a network. Currently, a same quantity of RO resources that can be used to repeatedly send a preamble may be configured for all SSBs, and all terminals are allowed to repeatedly send, for less than or equal to the same maximum quantity of repeated sending times, a preamble on an RO resource that corresponds to a selected SSB and that can be used to repeatedly send a preamble, to increase received power of the preamble and improve a coverage capability. However, in this manner, a difference between coverage capabilities of millimeter-wave beams is not distinguished, and a manner of evenly configuring RO resources for all beams cannot fully use the RO resources to improve the coverage capability.

For example, the following provides a PRACH resource configuration method.

An information element RACH-ConfigGeneric is used to configure a PRACH in a UL slot, and a terminal can use the PRACH in the UL slot to perform random access. As shown in FIG. 4, a horizontal direction represents time domain, a vertical direction represents frequency domain, a left side of the figure shows a downlink slot (DL slot), and a right side of the figure shows an uplink slot (UL slot). A dashed-line box of the UL slot represents a PRACH resource specified by RACH-ConfigGeneric. Specifically, time domain position information such as a periodicity, a frame number, a subframe number, a slot number, and a quantity of ROs in a slot of the PRACH in time domain distribution may be obtained by querying Tables 6.3.3.2-2 to 6.3.3.2-4 based on a parameter prach-ConfigurationIndex in the higher layer information element RACH-ConfigGeneric.

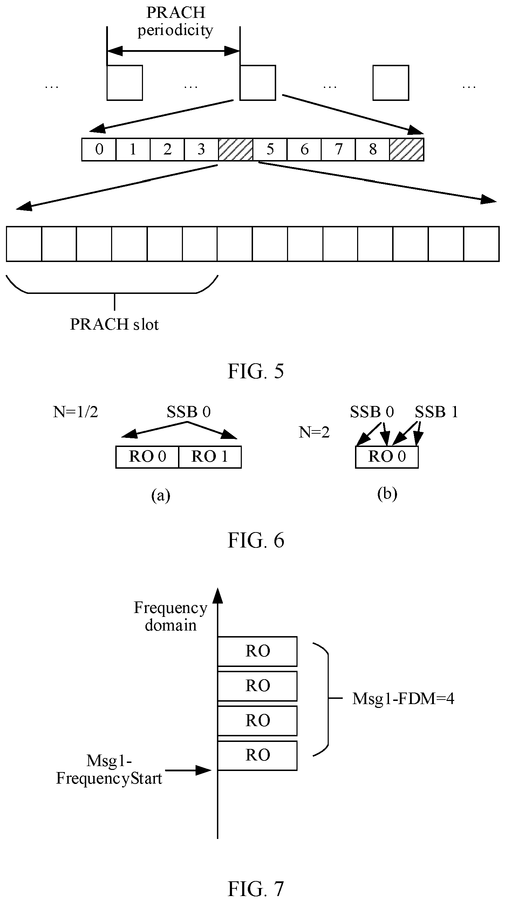

A structure of the PRACH resource is briefly described. As shown in FIG. 5, three blocks at an uppermost layer in the figure are frames in which PRACHs are located, a time domain distance between every two blocks is a PRACH periodicity, and an intermediate layer includes subframes of a frame in which the PRACH is located, where each block is a subframe in which the PRACH is located. A slot structure of the subframe in which the PRACH is located is shown at a bottom layer, where a 1^{st} block is a slot in which the PRACH is located, and is referred to as a PRACH slot. The PRACH slot includes six small blocks, and each small block is one RO. In other words, the PRACH slot includes six ROs. Based on parameters msg1-FrequencyStart and msg1-FDM in the higher layer information element RACH-ConfigGeneric, a start position and a quantity of frequency division multiplexing times of the PRACH in frequency domain can be separately obtained, so that a frequency domain position of the PRACH is determined.

As described above, in a process of the Msg1 transmission, the UE selects one RO, based on the SSB index, to communicate the preamble sequence. In a current NR standard, in addition to the PRACH position, a mapping relationship (also referred to as an association relationship, where for example, one SSB index may be associated with a plurality of ROs, or a plurality of SSB indexes are associated with one RO) between an RO and an SSB further needs to be specified.

Specifically, the network device may configure a mapping relationship between N SSBs and one RO by using a higher layer parameter ssb-perRACH-OccasionAndCB-PreamblesPerSSB. When N is less than 1, one SSB is associated with 1/N ROs. When N is greater than 1, the N SSBs are associated with one RO (where one SSB is associated with 1/N of an RO). For example, as shown in (a) in FIG. 6, when N=1/2, one SSB is associated with two ROs. As shown in (b) in FIG. 6, when N=2, one RO is associated with two SSBs. Therefore, when one SSB index is associated with a plurality of ROs, the UE may select one of the plurality of ROs, and communicate a preamble sequence on the RO. For a distribution manner of the PRACH resource in frequency domain, refer to FIG. 7. A vertical direction represents the frequency domain, each block represents one RO, and ROs are arranged starting from a frequency domain position specified by msg1-FrequencyStart. In this example, four ROs are distributed in frequency domain.

After determining the mapping relationship between the RO and the SSB, the terminal may start mapping between the RO and the SSB. Mapping may be first performed in frequency domain and then in time domain, next in a same slot and a same frame, and finally in different frames.

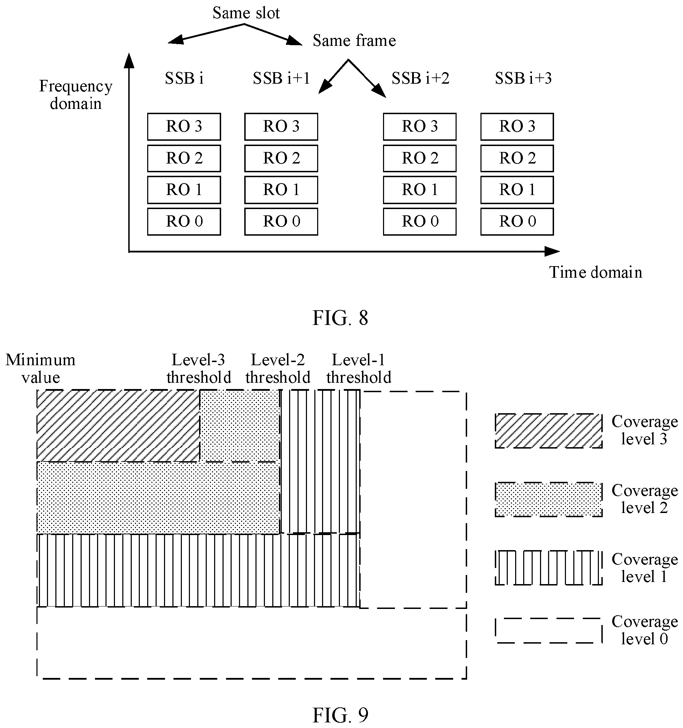

For example, as shown in FIG. 8, a horizontal direction represents the time domain, a vertical direction represents the frequency domain, and an SSB set used by a base station is {SSB i, SSB i+1, SSB i+2, SSB i+3}. When msg1-FDM=4 and N=1/4, one SSB is associated with four ROs, an RO set is denoted as {RO 1, RO 2, RO 3, RO 4}, and 16 ROs complete a complete RO-SSB mapping periodicity. Specifically, RO-SSB mapping starts from a frequency domain corresponding to a time domain position of an RO. To be specific, an RO 1 to an RO 4 corresponding to the SSB i occupy four RO frequency domain positions corresponding to a time domain position of a 1^{st} RO in a start PRACH slot of a same frame, an RO 1 to an RO 4 corresponding to the SSB i+1 occupy four RO frequency domain positions corresponding to a time domain position of a 2^{nd} RO in the start PRACH slot of the same frame, the RO 1 to the RO 4 corresponding to the SSB i+1 occupy the four RO frequency domain positions corresponding to the time domain position of the 2^{nd} RO in the start PRACH slot of the same frame, an RO 1 to an RO 4 corresponding to the SSB i+2 occupy four RO frequency domain positions corresponding to a time domain position of a 1^{st} RO in a 2^{nd} PRACH slot of the same frame, and an RO 1 to an RO 4 corresponding to the SSB i+3 occupy four RO frequency domain positions corresponding to a time domain position of a 2^{nd} RO in the 2^{nd} PRACH slot of the same frame.

In addition, to enhance a coverage capability of the PRACH, different quantities of (a maximum of four) coverage enhancement (coverage enhancement, CE) levels may be specified for the terminal by configuring signaling rach-CE-LevelInfoList in an information element RACH-ConfigCommon, and different RACH information is configured for each CE level. A preamble set that can be used by the terminal at each CE level may be specified by using signaling preambleMappingInfo.

In addition, a PRACH parameter of each CE level may be specified by configuring signaling prach-ParametersListCE in an information element PRACH-Config (where for example, a 1^{st} entry in a list is a PRACH parameter of a CE level 0, a 2^{nd} entry is a PRACH parameter of a CE level 1, and so on). numRepetitionPerPreambleAttempt may specify a quantity of PRACH repetitions at each CE level, and rsrp-ThresholdsPrachInfoList specifies a reference signal received power (reference signal received power, RSRP) threshold required by the UE to select a PRACH resource set (where a maximum of three RSRP thresholds are sent to determine a CE level of a PRACH; a 1^{st} element corresponds to an RSRP threshold 1, a 2^{nd} element corresponds to an RSRP threshold 2, and so on; and if only one CE level, that is, the CE level 0, is configured in pach-ParametersListCE, the UE can ignore this field). For example, as shown in FIG. 9, a maximum coverage level (CellCeCfg.CoverageLevel) supported by a cell: a coverage level 0, a coverage level 1, a coverage level 2, and a coverage level 3, are four different coverage levels of the cell. A horizontal axis indicates an RSRP threshold. The terminal can select different coverage levels based on an RSRP range within which a measured downlink RSRP value falls.

However, in a current resource configuration, only a same PRACH RSRP threshold set and a same maximum quantity of repetitions can be configured for all beams, so that RO resources are equally configured for all the beams. However, in a millimeter-wave communication system, an SSB is sent in an orthogonal time division manner by using a plurality of beams with different coverage capabilities, and random access is performed in a currently specified RO resource configuration and preamble repetition sending manner. Consequently, a problem that a PRACH resource cannot be fully used to enhance a random access capability of the terminal is caused. That is, resource utilization is low. This further affects random access efficiency of the terminal.

To resolve the foregoing problem, embodiments of this application provide a communication method. In the method, a communication resource can be flexibly configured, resource utilization can be improved, and random access efficiency of a terminal can be further improved. It should be understood that the following uses a network device and a terminal device as two communication parties for description. However, the two communication parties are not limited thereto in this application.

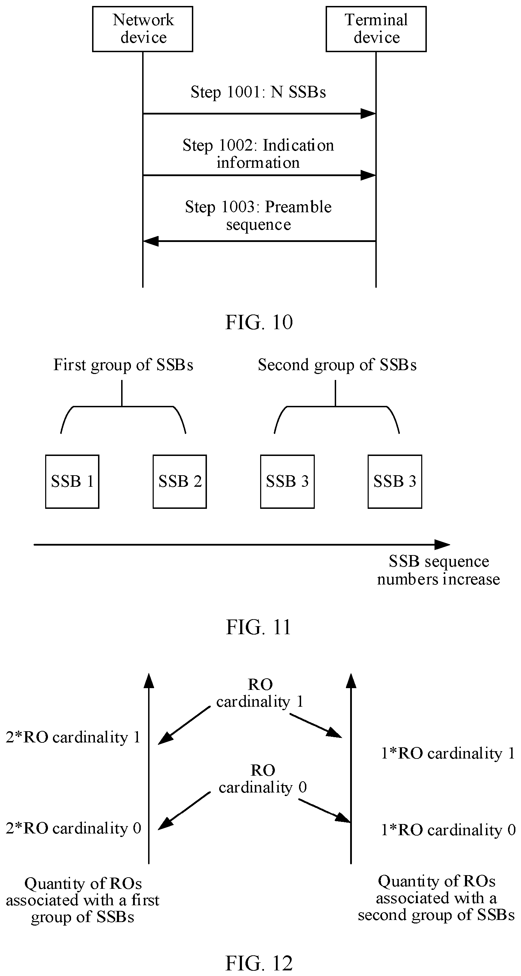

As shown in FIG. 10, the method may include the following steps.

Step 1001: The network device sends N SSBs to the terminal device, and correspondingly, the terminal device receives the N SSBs.

N is a positive integer greater than or equal to 2, and the N SSBs include a first SSB and a second SSB.

Step 1002: The network device sends indication information to the terminal device, and correspondingly, the terminal device receives the indication information.

The indication information indicates a PRACH resource, the PRACH resource includes a first PRACH resource and a second PRACH resource, the first SSB and the second SSB are associated with the first PRACH resource, and the second SSB is associated with the second PRACH resource, or a quantity of PRACH resources associated with the first SSB is different from a quantity of PRACH resources associated with the second SSB.

In other words, there may be three cases in which the first SSB and the second SSB are associated with different PRACH resources.

Case 1: Time-frequency positions of the resources are different.

The first SSB is associated with the first PRACH resource, the second SSB is associated with the first PRACH resource and the second PRACH resource, and time-frequency positions of the first PRACH resource and the second PRACH resource are different. In other words, the network device configures one PRACH resource, for example, a PRACH resource #A, for the first SSB, and configures two PRACH resources, for example, the PRACH resource #A and a PRACH resource #B, for the second SSB. One of the two PRACH resources may be the same as the PRACH resource configured for the first SSB, but the other PRACH resource is different from the PRACH resource configured for the first SSB. For example, resources configured for the first SSB may be the PRACH resource #A and the PRACH resource #B, and the PRACH resource #B and the PRACH resource #A have different positions in at least time domain. For example, a start position of the PRACH resource #B in time domain is different from a start position of the PRACH resource #Ain time domain, or a symbol corresponding to the PRACH resource #B in time domain is different from a symbol corresponding to the PRACH resource #A in time domain. Alternatively, a start position of the PRACH resource #B in frequency domain is different from a start position of the PRACH resource #A in frequency domain. Alternatively, a resource, for example, an RO, corresponding to the PRACH resource #B in frequency domain is different from a resource, for example, an RO, corresponding to the PRACH resource #A in frequency domain. It should be understood that there may be another case in which time-frequency positions of the PRACH resource #B and the PRACH resource #A are different. Details are not described herein.

The foregoing uses an example in which the RO resource is used as the PRACH resource for description. It should be understood that the PRACH resource may alternatively be a code resource, for example, a preamble (preamble) sequence. For example, resources configured for the first SSB may be a code resource #A and a code resource #B. That time-frequency positions of the code resource #A and the code resource #B are different may be that positions of time-frequency resources occupied by the code resource #A and the code resource #B are different. For different positions of the time-frequency resources, refer to the foregoing descriptions. Details are not described again.

Case 2: Quantities of resources are different.

The first SSB is associated with the first PRACH resource, the second SSB is associated with the first PRACH resource and the second PRACH resource, and quantities of resources of the first PRACH resource and the second PRACH resource are different. Still using an example in which the first PRACH resource is a PRACH resource #A and the second PRACH resource is a PRACH resource #B, that quantities of resources are different may be that quantities of time domain resources are different. For example, a quantity of resources corresponding to the PRACH resource #A in time domain is different from a quantity of resources corresponding to the PRACH resource #B in time domain. For example, the PRACH resource #A corresponds to three symbols in time domain, and the PRACH resource #B corresponds to five symbols in time domain. That quantities of resources are different may be that quantities of frequency domain resources are different. For example, a quantity of resources corresponding to the PRACH resource #A in frequency domain is different from a quantity of resources corresponding to the PRACH resource #B in frequency domain. For example, the PRACH resource #A corresponds to three ROs in frequency domain (that is, the first SSB is associated with the three ROs, where for an association relationship between the SSB and the RO, refer to the foregoing descriptions, and details are not described herein again), and the PRACH resource #B corresponds to five ROs in frequency domain. It should be understood that, when the PRACH resource includes a code resource, for example, a preamble (preamble) sequence, for example, resources configured for the first SSB may be a code resource #A and a code resource #B. That quantities of resources of the code resource #A and the code resource #B are different may be that quantities of time-frequency resources occupied by the code resource #A and the code resource #B are different. For different quantities of time-frequency resources, refer to the foregoing descriptions. Details are not described again. Alternatively, that quantities of resources of the code resource #A and the code resource #B are different may be that quantities of preamble sequences included in the code resource #A and preamble sequences included in the code resource #B are different. This is not limited in embodiments of this application. It should be further understood that the foregoing numbers are merely used as examples instead of limitations.

Case 3: Time-frequency positions of resources and quantities of the resources are different.

This case may be a combination of Case 1 and Case 2, that is, a combination of the example in Case 1 and the example in Case 2. Details are not described herein again.

It should be understood that, in the foregoing three cases, when the PRACH resource is the code resource, that the first PRACH resource and the second PRACH resource are different may alternatively be understood as that codeword sequences are different, and different codeword sequences in a same RO resource (at a same time-frequency position) may also be distinguished. For example, the resources configured for the first SSB may be a code resource #A and a code resource #B. A difference between the code resource #A and the code resource #B is reflected in different sequences, for example, a low cross-correlation and a high auto-correlation. A cross-correlation between different sequences is 0, or is extremely close to 0. In other words, different sequences are orthogonal or approximately orthogonal.

In conclusion, the network device may configure different PRACH resources for the first SSB and the second SSB, and indicate the PRACH resources to the terminal device by using the indication information (for example, first information).

Alternatively, the indication information indicates PRACH resources of M SSBs, M is a positive integer less than or equal to N, D SSBs belong to the N SSBs, the D SSBs belong to Q mutually exclusive non-zero SSB subsets, Q is a positive integer greater than or equal to 2, the Q mutually exclusive non-zero SSB subsets include a first SSB subset and a second SSB subset, the first SSB subset includes a fifth SSB, the second SSB subset includes a sixth SSB, and a quantity of PRACH resources associated with the fifth SSB is different from a quantity of PRACH resources associated with the sixth SSB, or any one of the D SSBs is associated with a same quantity of PRACH resources. In other words, the indication information may alternatively indicate the PRACH resource corresponding to the second SSB.

Generally, the indication information may indicate the PRACH resource associated with the first SSB and the PRACH resource associated with the second SSB, or the indication information may indicate the PRACH resource associated with the second SSB. This is not limited in embodiments of this application. It should be understood that, when the indication information indicates the PRACH resource associated with the second SSB, the PRACH resource associated with the first SSB may be preconfigured, or may be indicated based on other information. This is not limited in embodiments of this application.

In a possible implementation, the first SSB belongs to a first SSB set, the second SSB belongs to a second SSB set, the second SSB set includes J SSBs, and J is a positive integer greater than or equal to 1.

The J SSBs belong to Q mutually exclusive non-zero SSB subsets, Q is a positive integer greater than or equal to 2, the Q mutually exclusive non-zero SSB subsets include a first SSB subset and a second SSB subset, the first SSB subset includes a third SSB, the second SSB subset includes a fourth SSB, and a quantity of ROs associated with the third SSB is different from a quantity of ROs associated with the fourth SSB. In other words, the second SSB set may be divided into different subsets, quantities of ROs associated with SSBs included in different subsets are different, and quantities of ROs associated with SSBs included in a same subset are the same. For example, the second SSB set is divided into a subset #A and a subset #B, the subset #A includes an SSB #C and an SSB #D, and the subset #B includes an SSB #E and an SSB #F. The SSB #C and the SSB #D each are associated with three ROs, and the SSB #E and the SSB #F each are associated with four ROs.

Alternatively, any one of the J SSBs is associated with a same quantity of ROs. This may also be understood as that all SSBs included in the second SSB set are divided into a same subset, or this may be understood as that all SSBs included in the second SSB set are not divided into subsets.

In a possible implementation, the first SSB set may include all SSBs configured by the network device for the terminal device, and the second SSB set may include an SSB that needs to be enhanced in the first SSB set.

In a possible manner of dividing the SSBs into different subsets, a plurality of SSBs are divided into different subsets based on coverage capabilities of beams corresponding to the SSBs.

It should be understood that the foregoing names such as the set and the subset are merely used as an example instead of a limitation, and there may alternatively be other names such as a group. It should be further understood that the foregoing set, subset, or group may not exist. For example, coverage capabilities of beams corresponding to the M SSBs are different. Coverage capabilities of beams corresponding to an SSB 0 to an SSB 4 are the same, and coverage capabilities of beams corresponding to an SSB 5 to an SSB 13 are the same, and are different from the coverage capabilities of the beams corresponding to the SSB 0 to the SSB 4. In this case, there may be no set, subset, or group division, quantities of ROs associated with the SSB 0 to the SSB 4 may be the same, and quantities of ROs associated with the SSB 5 to the SSB 13 may be the same and different from the quantities of ROs associated with the SSB 0 to the SSB 4.

For example, there is the subset division. In a possible manner, a quantity of RSRP thresholds corresponding to the first SSB subset is different from a quantity of RSRP thresholds corresponding to the second SSB subset. For example, the RSRP thresholds corresponding to the first SSB subset are 3, 4, and 5, and the RSRP thresholds corresponding to the second SSB subset are 3, 4, 5, 6, and 7. In this way, the quantity of RSRP thresholds corresponding to the second SSB subset is 5, and the quantity of RARP thresholds corresponding to the first SSB subset is 3. Two different subsets correspond to different quantities of RSRP thresholds. It should be understood that the RSRP threshold may be used by the terminal device to determine information, for example, a quantity of repeated sending times of a preamble sequence. For example, the RSRP threshold may correspond to the quantity of repeatedly sending times of the preamble sequence. For example, if the RSRP threshold is 3, the corresponding quantity of repeatedly sending times of the preamble sequence is 2; if the RSRP threshold is 5, the corresponding quantity of repeatedly sending times of the preamble sequence is 3; or if the RSRP threshold is 8, the corresponding quantity of repeatedly sending times of the preamble sequence is 4. It should be understood that different RSRP thresholds correspond to different quantities of repeated sending times. When a value of an RSRP falls between two RSRP thresholds, a quantity of repeated sending times may be determined based on a value relationship between the RSRP and the RSRP thresholds. For example, if a value of an RSRP 1 is 4, which is greater than the RSRP threshold of 3 and less than the RSRP threshold of 5, a quantity of repeated sending times corresponding to the RSRP 1 may be 3, that is, the quantity of repeated sending times corresponding to the RSRP threshold 5. In other words, this may be understood as that different RSRP intervals correspond to different repetition quantities. For example, when a value of an RSRP ranges from 3 to 5, a corresponding quantity of repeated sending times is 3; or when a value of an RSRP ranges from 5 to 8, a corresponding quantity of repeated sending times is 4.

The terminal device may determine the quantity of repeated sending times of the preamble sequence based on the RSRP threshold. Optionally, the terminal device may measure N RSRPs corresponding to the N received SSBs, where the N SSBs correspond to N beams. The terminal device selects one beam from the N beams based on an RSRP result obtained through measurement. For example, the terminal device may select a beam corresponding to a largest RSRP. Further, the terminal device determines an SSB subset corresponding to the beam, and after determining the SSB subset, the terminal device may determine a set of RSRP thresholds corresponding to the subset. Then, the terminal device compares the RSRP corresponding to the beam with the RSRP set, to determine a quantity of repeated sending times corresponding to the beam.

For example, N is 3, and three SSBs are an SSB 1, an SSB 2, and an SSB 3. The terminal device measures an RSRP 1 corresponding to the SSB 1, an RSRP 2 corresponding to the SSB 2, and an RSRP 3 corresponding to the SSB 3. A value of the RSRP 2 is the largest, and is 5. In this case, a beam 2 carrying the SSB 2 is selected. The terminal device further determines an SSB subset corresponding to the beam 2, and determines an RSRP threshold set corresponding to the subset. The RSRP threshold set includes 3, 4, and 5, and the three RSRP thresholds correspond to quantities 2, 3, and 4 of repeated sending times. The terminal device determines that the value (5) of the RSRP 2 is equal to a 3^{rd} RSRP threshold (5), and determines that a quantity of repeatedly sending times of a preamble sequence on the beam 2 is 4. It should be understood that the foregoing values and the correspondence between the thresholds and the quantities of repeated sending times are merely used as an example instead of a limitation.

In a possible manner, the RSRP threshold may be indicated by using the indication information. It should be understood that the indication information may indicate RSRP thresholds corresponding to some SSB subsets, or may indicate RSRP thresholds corresponding to all SSB subsets. When the indication information indicates the RSRP thresholds corresponding to the some SSB subsets, RSRP thresholds corresponding to remaining SSB subsets may be preconfigured or predefined.

In another possible manner, the RSRP threshold may be preconfigured or predefined. In other words, the RARP thresholds corresponding to all the SSB subsets may be preconfigured or predefined. This is not limited in embodiments of this application.

The following provides a manner in which the indication information indicates the PRACH resource, and there are two cases.

Case A: When the second SSB set is divided into a plurality of different subsets, the indication information may indicate a first parameter, and the first parameter includes at least one of the following: an SSB in the second SSB set, a subset to which the SSB in the second SSB set belongs, quantities of ROs corresponding to SSBs in different subsets of the second SSB set, time-frequency positions of PRACHs corresponding to the SSBs in different subsets of the second SSB set, maximum quantities of repeated sending times corresponding to the SSBs in different subsets of the second SSB set, or division formats of preamble sequences corresponding to the SSBs in different subsets of the second SSB set.

Case B: When the second SSB set is not divided into subsets, the indication information may indicate a first parameter, and the first parameter includes at least one of the following: a quantity of ROs corresponding to an SSB in the second SSB set, a time-frequency position of a PRACH corresponding to the SSB in the second SSB set, a maximum quantity of repeated sending times corresponding to the SSB in the second SSB set, or a division format of a preamble sequence corresponding to the SSB in the second SSB set.

The indication information may indicate the foregoing parameter by using an indication identifier, an indication index, or the like. Case A is used as an example for detailed description below.

The indication information indicates the SSB in the second SSB set, and may indicate an index (index) of the SSB, or may indicate an identifier of the SSB. The terminal device may determine the SSB based on the index or the identifier of the SSB.

The indication information indicates the subset to which the SSB in the second SSB set belongs, and may indicate indexes or identifiers of different subsets. It should be understood that the network device and the terminal device may preconfigure the indexes or the identifiers of different subsets. For example, as shown in FIG. 11, a horizontal direction is a direction in which SSB sequence numbers increase. The network device first sorts coverage capabilities of beams of SSBs, determines groups of the SSBs, and may specify an SSB sequence number by using the indication information. SSBs before the sequence number (including an SSB with the sequence number) are a group of SSBs, and SSBs after the sequence number are another group of SSBs.

Assuming that a value of N is 4, four SSBs may belong to a maximum of four subsets, and the indication information may indicate, based on a correspondence shown in Table 1, a subset to which an SSB belongs.

**Table 1 Correspondence between indication information and an SSB subset**

| Indication information configuration | SSB subset |
|---|---|
| [00] | SSB subset 0 |
| [01] | SSB subset 1 |
| [10] | SSB subset 2 |
| [11] | SSB subset 3 |

The indication information indicating the SSB subset, or lengths of some fields that are in the indication information and that indicate the SSB subset depend on the quantity N of SSBs and a quantity P of subsets. For example, a length is a minimum integer greater than (P-1) log₂(N). In the foregoing example, if the quantity of subsets is 4, and the quantity of SSBs is 4, a length of a field is a minimum integer quantity of bits greater than 3 *log₂(4).

Alternatively, the SSB group and the subset to which the SSB belongs may be defined by using a table. In this case, the lengths of the some fields that are in the indication information and that indicate the SSB subset depend on the quantity N of SSBs and the quantity P of subsets. For example, a length is a minimum integer (a quantity of cases in which P-1 different SSBs are selected from the N SSBs) greater than a combination quantity C(P-1,N). In other words, the SSBs are sorted first, and then the P-1 SSBs are selected from the N SSBs as breakpoints. SSBs between every two breakpoints form a group, each of remaining SSBs forms a group, and there are P groups in total. In the foregoing example, if the quantity of subsets is 4, and the quantity of SSBs is 4, the length of the field is C(3,4)=4*3*2/1/2/3=4 bits.

When indicating the quantities of ROs corresponding to the SSBs in different subsets of the second SSB set, the indication information may directly indicate the quantity of ROs, or may indicate a reference value (a cardinality) of the quantity of ROs, and an offset value or a coefficient of the quantity of ROs corresponding to the SSB and the reference value. For example, as shown in FIG. 12, a vertical direction is a direction in which RO sequence numbers corresponding to SSBs increase. The network device specifies an RO cardinality by using the indication information, and quantities of ROs corresponding to different SSB groups are obtained based on a predefined mapping relationship. A left axis represents a mapping relationship between a quantity of ROs corresponding to a first SSB subset and an RO cardinality, and a right axis represents a mapping relationship between a quantity of ROs corresponding to a second SSB subset and the RO cardinality.

Assuming that the reference value of the quantity of ROs has two states, a correspondence between the indication information and the reference value of the quantity of ROs may be shown in Table 2.

**Table 2 Correspondence between indication information and a reference value of a quantity of ROs**

| Indication information configuration | Cardinality of the quantity of ROs |
|---|---|
| [0] | Reference value 0 of the quantity of ROs |
| [1] | Reference value 1 of the quantity of ROs |

The indication information indicating the quantity of ROs, or lengths of some fields that are in the indication information and that indicate the quantity of ROs depend on a type of the reference value of the quantity of ROs. For example, a length is a minimum integer greater than log₂(O), and O is the type of the reference value of the quantity of ROs. In the foregoing example, there are two types (0 and 1) of the reference value of the quantity of ROs, and the length of the field is a minimum integer quantity of bits greater than log₂(2).

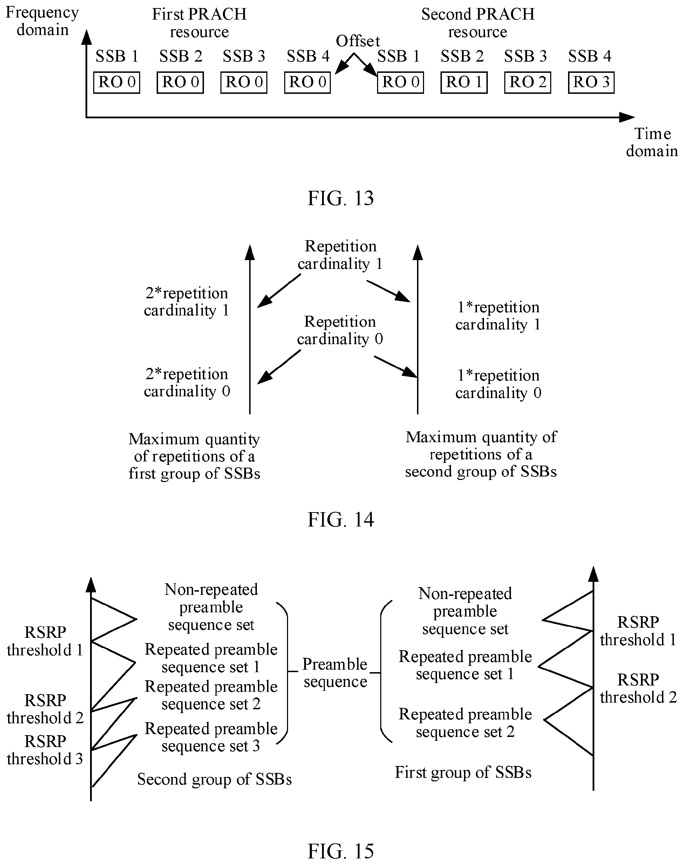

When indicating the time-frequency positions of the PRACHs corresponding to the SSBs in different subsets of the second SSB set, the indication information may directly indicate the time-frequency positions of the PRACHs corresponding to the SSBs in different subsets, or may indicate an offset value, for example, a slot offset, of a PRACH resource corresponding to the SSB in the second SSB set relative to a PRACH resource corresponding to the SSB in the first SSB set. For example, as shown in FIG. 13, a horizontal direction represents time domain, and a vertical direction represents frequency domain. The network device specifies a relative relationship between positions of a first PRACH resource and a second PRACH resource by using the indication information. For example, there is a specified interval in time domain, and positions are the same in frequency domain. The indication information may indicate the offset value based on a correspondence shown in Table 3.

**Table 3 Correspondence between indication information and an offset slot**

| Indication information configuration | Offset slot |
|---|---|
| [0] | Offset 0 |
| [1] | Offset 1 |

The indication information indicating the slot offset, or a length of the slot offset indicated in the indication information depends on a type of a quantity of slots included in a time interval between the first PRACH and the second PRACH. For example, the length is a minimum integer greater than log₂(M), and M is the type of the quantity of slots included in the time interval between the first PRACH and the second PRACH. In the foregoing example, there are two types (0 and 1) of the quantities of slots, and a length of a field is a minimum integer quantity of bits greater than log₂(2).

When indicating the maximum quantities of repeated sending times corresponding to the SSBs in different subsets of the second SSB set, the indication information may directly indicate the maximum quantity of repeated sending times, or may indicate a reference value (a cardinality) of the maximum quantity of repeated sending times, and an offset value or a coefficient of the maximum quantity of repeated sending times corresponding to the SSB and the reference value. As shown in FIG. 14, a vertical direction is a direction in which maximum quantities of repeated sending times of different SSB groups increase. A base station specifies a repetition cardinality by using the indication information, and maximum quantities of repeated sending times of different SSB groups are obtained based on a predefined mapping relationship. A left axis represents a mapping relationship between a maximum quantity of repeated sending times and a repetition cardinality of a first group of SSBs, and a right axis represents a mapping relationship between a maximum quantity of repeated sending times and a repetition cardinality of a second group of SSBs.

It is assumed that there are two reference values for the quantity of repeated sending times. For a correspondence between the indication information and the reference value, refer to Table 4.

**Table 4 Correspondence between indication information and a reference value of a maximum repetition quantity**

| Indication information configuration | Reference value of the quantity of repeated sending times |
|---|---|
| [0] | 0 |
| [1] | 1 |

The indication information indicating the maximum quantity of repeated sending times, or a length of a slot offset indicated in the indication information depends on a type of the cardinality of the quantity of repeated sending times. For example, the length is a minimum integer greater than log₂(R), and R is the type of the cardinality of the quantities of repeated sending times of the SSBs in different subsets. In the foregoing example, there are two types (0 and 1) of the cardinality of the quantity of repeated sending times, and a length of a field is a minimum integer quantity of bits greater than log₂(2).

The indication information indicates the division formats of the preamble sequences corresponding to the SSBs in different subsets of the second SSB set. It is assumed that there are two division formats of the preamble sequences. For a correspondence between the indication information and the format, refer to Table 5.

**Table 5 Correspondence between the indication information and the preamble sequence format**

| Indication information configuration | Preamble division format |
|---|---|
| [0] | Format 0 |
| [1] | Format 1 |

The indication information indicating the preamble sequence division format, or lengths of some fields that are in the indication information and that indicate the preamble sequence division format depend on a type of the preamble sequence division format. For example, a length is a minimum integer greater than log₂(T), and T is the type of the preamble sequence division format. In the foregoing example, there are two preamble sequence division formats (a format 0 and a format 1), and a length of a field is a minimum integer quantity of bits greater than log₂(2). For example, as shown in FIG. 15, the network device specifies, by using the indication information, preamble set division of different SSB groups. The terminal determines, based on the indication information and a mapping relationship between a preamble set and a quantity of repeated sending times, preamble sets used for different quantities of repeated sending times. A left axis represents a mapping relationship between a quantity of repeated sending times of a second group of SSBs and a preamble set, and a right axis represents a mapping relationship between a quantity of repeated sending times of a first group of SSBs and a preamble set.

It should be understood that the values and the correspondences in the foregoing examples are merely used as examples instead of limitations.

Optionally, the indication information may be carried in a SIB1. Specifically, for example, the indication information includes different fields. The network device may indicate time domain position information of the first PRACH resource by using a field prach-ConfigurationIndex, indicate, by using a field ce-TimeOffset, offset information of a time domain position of the second PRACH resource relative to a time domain position of the first PRACH resource, indicate a quantity of slots of the second PRACH resource by using a field ce-SlotNumPerSSBClass, indicate a subset (a grouping case) of the second SSB set by using a field ce-SSBClass, indicate frequency domain start position information of the first PRACH resource by using a field msg1-FrequencyStart, and indicate information about a quantity of frequency domain multiplexing times by using a field msg1-FDM. The field "prach-ConfigurationIndex" indicating a PRACH configuration index, the field "msg1-FDM" indicating the quantity of frequency division multiplexing times, and the field "msg1-FrequencyStart" indicating the frequency start position are some fields in the SIB1. Another field may be located at a position after the field "msg1-FrequencyStart" indicating the frequency start position in the SIB1.

It should be understood that the indication information indicating an SSB in the second SSB set, a subset to which the SSB in the second SSB set belongs, quantities of ROs corresponding to SSBs in different subsets of the second SSB set, time-frequency positions of PRACHs corresponding to the SSBs in different subsets of the second SSB set, maximum quantities of repeated sending times corresponding to the SSBs in different subsets of the second SSB set, or division formats of preamble sequences corresponding to the SSBs in different subsets of the second SSB set, or indicating a quantity of ROs corresponding to an SSB in the second SSB set, a time-frequency position of a PRACH corresponding to the SSB in the second SSB set, a maximum quantity of repeated sending times corresponding to the SSB in the second SSB set, a division format of a preamble sequence corresponding to the SSB in the second SSB set, or the like may be different fields in the indication information as described above, or may be separate indication information. For example, first indication information indicates the SSB in the second SSB set, second indication information indicates the subset to which the SSB in the second SSB set belongs, third indication information indicates the quantities of ROs corresponding to the SSBs in different subsets of the second SSB set, fourth indication information indicates the time-frequency positions of the PRACHs corresponding to the SSBs in different subsets of the second SSB set, fifth indication information indicates the maximum quantities of repeated sending times corresponding to the SSBs in different subsets of the second SSB set, and sixth indication information indicates the division formats of the preamble sequences corresponding to the SSBs in different subsets of the second SSB set. This is not limited in embodiments of this application.

Step 1003: The terminal device sends the preamble sequence to the network device on the PRACH resource based on the indication information, and correspondingly, the network device receives the preamble sequence.

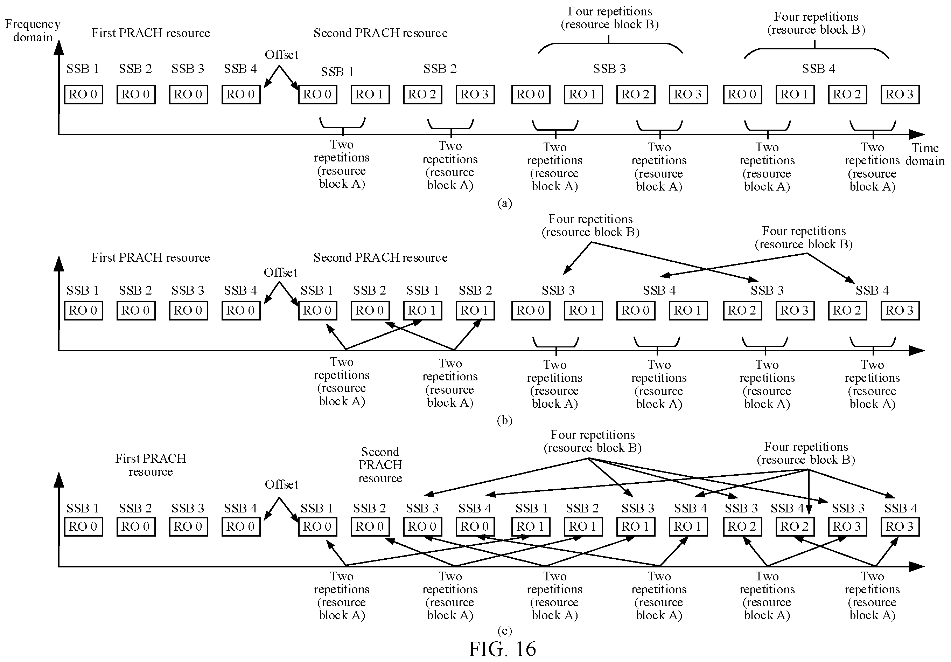

It may be understood that, before sending the preamble sequence, the terminal device may further determine the PRACH resource based on the indication information. As shown in FIG. 16, the network device specifies, by using the indication information, RO resource positions and maximum repetition quantities of different SSB groups, and mapping relationships between different SSB groups and preamble subsets. FIG. 16 shows several RO use formats for different quantities of repeated sending times, which are respectively shown in (a), (b), and (c) in FIG. 16. When a quantity of repetitions is 2, an RO group may be randomly selected from a resource block A. When a quantity of repetitions is 4, a resource block B may be used. When the quantity of repetitions is 2, the RO group may be randomly selected from the resource block A. When the quantity of repetitions is 4, the resource block B may be used. The resource block A includes two latest ROs that appear for the 1^{st} time and two subsequent ROs of a same SSB, and the resource block B includes four ROs corresponding to the same SSB. It should be further understood that the terminal device may determine an actual quantity of repeated sending times of the preamble sequence based on the descriptions in step 1002. Details are not described herein again.

In the method, for coverage capabilities of different beams, the network device differentially indicates an RO resource and a specified maximum quantity of repetitions to the terminal device, and the terminal device communicated information based on the configured resource. In this way, access capabilities of the beams can be differentially enhanced, resource utilization can be improved, and a coverage capability can be improved.

It may be understood that, to implement the functions in the foregoing embodiments, the network device and the terminal device include corresponding hardware structures and/or software modules for performing the functions. A person skilled in the art should be easily aware that, in combination with the units and the method steps in the examples described in embodiments disclosed in this application, this application can be implemented by using hardware or a combination of hardware and computer software. Whether a function is performed by hardware or hardware driven by computer software depends on particular application scenarios and design constraint conditions of the technical solutions.

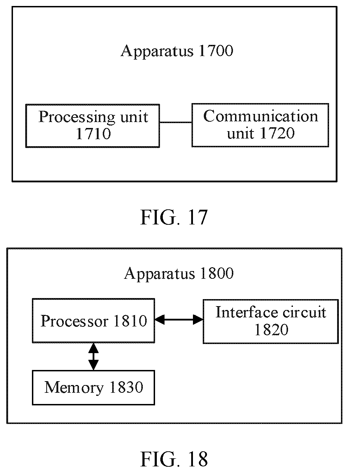

FIG. 17 and FIG. 18 are diagrams of structures of possible communication apparatuses according to an embodiment of this application. The communication apparatuses may be configured to implement the functions of the terminal device or the network device in the foregoing method embodiments, and therefore can also implement the beneficial effects in the foregoing method embodiments. In embodiments of this application, the communication apparatus may be one of the terminals 120a to 120j shown in FIG. 1, may be the base station 110a or 110b shown in FIG. 1, or may be a module (for example, a chip) used in the terminal device or the network device.

As shown in FIG. 17, a communication apparatus 1700 includes a processing unit 1710 and a transceiver unit 1720. The communication apparatus 1700 is configured to implement functions of the terminal apparatus or the network apparatus in the method embodiments shown in FIG. 10 to FIG. 16.

When the communication apparatus 1700 is configured to implement the functions of the terminal apparatus in the method embodiment shown in FIG. 10, the transceiver unit 1720 is configured to receive N SSBs, where N is a positive integer greater than or equal to 2.

The processing unit 1710 is configured to obtain N RSRPs by measuring the N SSBs.

The transceiver unit 1720 may be further configured to receive indication information, where the indication information indicates a PRACH resource, the PRACH resource includes a first PRACH resource and a second PRACH resource, the N SSBs include a first SSB and a second SSB, the first SSB and the second SSB are associated with the first PRACH resource, and the second SSB is associated with the second PRACH resource, or a quantity of PRACH resources associated with the first SSB is different from a quantity of PRACH resources associated with the second SSB.

Alternatively, the indication information indicates PRACH resources of M SSBs, M is a positive integer less than or equal to N, D SSBs belong to the N SSBs, the D SSBs belong to Q mutually exclusive non-zero SSB subsets, Q is a positive integer greater than or equal to 2, the Q mutually exclusive non-zero SSB subsets include a first SSB subset and a second SSB subset, the first SSB subset includes a fifth SSB, the second SSB subset includes a sixth SSB, and a quantity of PRACH resources associated with the fifth SSB is different from a quantity of PRACH resources associated with the sixth SSB, or any one of the D SSBs is associated with a same quantity of PRACH resources.

Optionally, the processing unit 1710 is further configured to parse the indication information.

Optionally, the processing unit 1710 is further configured to determine, based on the indication information, PRACH resources associated with the N SSBs. When the PRACH resources are ROs, the processing unit 1710 is further configured to determine the ROs associated with the N SSBs, and the processing unit 1710 is further configured to determine a preamble sequence corresponding to the ROs.

The transceiver unit 1720 is further configured to send the preamble sequence based on the indication information.

When the communication apparatus 1700 is configured to implement the functions of the network device in the method embodiment shown in FIG. 10, the transceiver unit 1720 is configured to send N SSBs, where N is a positive integer greater than or equal to 2.

The transceiver unit 1720 is configured to send indication information, where the indication information indicates a PRACH resource, the PRACH resource includes a first PRACH resource and a second PRACH resource, the N SSBs include a first SSB and a second SSB, the first SSB and the second SSB are associated with the first PRACH resource, and the second SSB is associated with the second PRACH resource, or a quantity of PRACH resources associated with the first SSB is different from a quantity of PRACH resources associated with the second SSB.

Alternatively, the indication information indicates PRACH resources of M SSBs, M is a positive integer less than or equal to N, D SSBs belong to the N SSBs, the D SSBs belong to Q mutually exclusive non-zero SSB subsets, Q is a positive integer greater than or equal to 2, the Q mutually exclusive non-zero SSB subsets include a first SSB subset and a second SSB subset, the first SSB subset includes a fifth SSB, the second SSB subset includes a sixth SSB, and a quantity of PRACH resources associated with the fifth SSB is different from a quantity of PRACH resources associated with the sixth SSB, or any one of the D SSBs is associated with a same quantity of PRACH resources.

Optionally, the processing unit 1710 may be configured to determine the N SSBs.

Optionally, the processing unit 1710 may be configured to determine the PRACH resources associated with the N SSBs.

Optionally, the processing unit 1710 may be configured to determine the indication information.

The transceiver unit 1720 is further configured to receive the preamble sequence.

Optionally, the processing unit 1710 may be configured to parse the preamble sequence.

For more detailed descriptions of the processing unit 1710 and the transceiver unit 1720, directly refer to the related descriptions in the method embodiments shown in FIG. 10 to FIG. 16. Details are not described herein again.

As shown in FIG. 18, a communication apparatus 1810 includes a processor 1810 and an interface circuit 1820. The processor 1810 and the interface circuit 1820 are coupled to each other. It may be understood that the interface circuit 1820 may be a transceiver or an input/output interface. Optionally, the communication apparatus 1810 may further include a memory 1830, configured to: store instructions executed by the processor 1810, store input data needed by the processor 1810 to run instructions, or store data generated after the processor 1810 runs instructions.

When the communication apparatus 1810 is configured to implement the methods shown in FIG. 10 to FIG. 16, the processor 1810 is configured to implement a function of the processing unit 1710, and the interface circuit 1820 is configured to implement a function of the transceiver unit 1720.

When the foregoing communication apparatus is a chip used in a terminal, the terminal chip implements functions of the terminal in the foregoing method embodiments. The terminal chip receives information from another module (for example, a radio frequency module or an antenna) in the terminal, where the information is sent by a base station to the terminal; or the terminal chip sends information to another module (for example, a radio frequency module or an antenna) in the terminal, where the information is sent by the terminal to a base station.

When the foregoing communication apparatus is a module used in a base station, the base station module implements functions of the base station in the foregoing method embodiments. Th base station module receives information from another module (for example, a radio frequency module or an antenna) in the base station, where the information is sent by a terminal to the base station; or the base station module sends information to another module (for example, a radio frequency module or an antenna) in the base station, where the information is sent by the base station to a terminal. The base station module herein may be a baseband chip in the base station, or may be a DU or another module. The DU herein may be a DU in an open radio access network (open radio access network, O-RAN) architecture.

It may be understood that, the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be located in an ASIC. In addition, the ASIC may be located in a base station or a terminal. Alternatively, the processor and the storage medium may exist in a base station or a terminal as discrete components.

All or some of the foregoing embodiments may be implemented by using software, hardware, firmware, or any combination thereof. When the software is used to implement embodiments, all or some of embodiments may be implemented in a form of a computer program product. The computer program product includes one or more computer programs or instructions. When the computer programs or instructions are loaded and executed on a computer, the procedures or functions in embodiments of this application are all or partially performed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

Optionally, depending on whether the following content is used in the specification, in this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B each may be singular or plural. In the text descriptions of this application, the character "/" generally represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

## Claims

1. A communication method, comprising:
receiving N synchronization signal and PBCH blocks SSBs, wherein N is a positive integer greater than or equal to 2;
receiving indication information, wherein the indication information indicates a physical random access channel PRACH resource, the PRACH resource comprises a first PRACH resource and a second PRACH resource, the N SSBs comprise a first SSB and a second SSB, the first SSB and the second SSB are associated with the first PRACH resource, and the second SSB is associated with the second PRACH resource, or a quantity of PRACH resources associated with the first SSB is different from a quantity of PRACH resources associated with the second SSB; and
sending a preamble sequence on the PRACH resource based on the indication information.

2. The method according to claim 1, wherein the PRACH resource comprises a random access occasion RO resource and/or a code resource, and that a quantity of PRACH resources associated with the first SSB is different from a quantity of PRACH resources associated with the second SSB comprises:
a quantity of RO resources associated with the first SSB is different from a quantity of RO resources associated with the second SSB.

3. The method according to claim 1 or 2, wherein the first SSB belongs to a first SSB set, the second SSB belongs to a second SSB set, the second SSB set comprises D SSBs, and D is a positive integer greater than or equal to 1; and
the D SSBs belong to Q mutually exclusive non-zero SSB subsets, Q is a positive integer greater than or equal to 2, the Q mutually exclusive non-zero SSB subsets comprise a first SSB subset and a second SSB subset, the first SSB subset comprises a third SSB, the second SSB subset comprises a fourth SSB, and a quantity of ROs associated with the third SSB is different from a quantity of ROs associated with the fourth SSB; or
any one of the D SSBs is associated with a same quantity of ROs.

4. The method according to claim 3, wherein a quantity of RSRP thresholds corresponding to the first SSB subset is different from a quantity of RSRP thresholds corresponding to the second SSB subset.

5. The method according to any one of claims 1 to 4, wherein that the indication information indicates a PRACH resource comprises:
the indication information indicates a first parameter, and the first parameter comprises at least one of the following: an SSB in the second SSB set, a subset to which the SSB in the second SSB set belongs, quantities of ROs corresponding to SSBs in different subsets of the second SSB set, time-frequency positions of PRACHs corresponding to the SSBs in different subsets of the second SSB set, maximum quantities of repeated sending times corresponding to the SSBs in different subsets of the second SSB set, division formats of preamble sequences corresponding to the SSBs in different subsets of the second SSB set, a quantity of ROs corresponding to the SSB in the second SSB set, a time-frequency position of a PRACH corresponding to the SSB in the second SSB set, a maximum quantity of repeated sending times corresponding to the SSB in the second SSB set, or a division format of a preamble sequence corresponding to the SSB in the second SSB set.

6. The method according to claim 5, wherein the indication information comprises at least one of a first field, a second field, a third field, a fourth field, and a fifth field;
the first field indicates the time-frequency positions of the PRACHs corresponding to the SSBs in different subsets of the second SSB set, a length of the first field is a minimum integer greater than log₂(M), and M is a type of a quantity of slots comprised in a time interval between the first PRACH and the second PRACH;
when the second field indicates subsets of the N SSBs, a length of the second field is a minimum integer greater than (P-1)*log₂(N), and P is a quantity of subsets;
when the third field indicates the quantities of ROs corresponding to the SSBs in different subsets of the second SSB set, a length of the third field is a minimum integer greater than log₂(O), and O is a type of a cardinality of a quantity of ROs;
when the fourth field indicates the maximum quantities of repeated sending times corresponding to the SSBs in different subsets of the second SSB set, a length of the fourth field is a minimum integer greater than log₂(R), and R is a type of a cardinality of quantities of repeated sending times of the SSBs in different subsets; and
when the fifth field indicates the division formats of the preamble sequences corresponding to the SSBs in different subsets of the second SSB set, a length of the fifth field is a minimum integer greater than log₂(T), and T is a type of division of the preamble sequences of the SSBs in different subsets.

7. The method according to any one of claims 4 to 6, wherein the indication information further indicates an RSRP threshold corresponding to the first SSB subset and/or an RSRP threshold corresponding to the second SSB subset, and different RSRP thresholds correspond to different repetition quantities.

8. The method according to any one of claims 1 to 7, wherein the method further comprises:
measuring N RSRPs corresponding to the N SSBs;
determining a first beam from N beams, wherein an RSRP corresponding to the first beam is a largest RSRP in the N RSRPs;
determining an SSB subset corresponding to the first beam, and determining an RSRP threshold set corresponding to the SSB subset corresponding to the first beam; and
determining, based on the RSRP corresponding to the first beam and the RSRP threshold set, a repetition quantity corresponding to the first beam; and
the sending a preamble sequence on the PRACH resource based on the indication information comprises:
sending the preamble sequence on the PRACH resource based on the repetition quantity corresponding to the first beam.

9. A communication method, comprising:
sending N SSBs, wherein N is a positive integer greater than or equal to 2;
sending indication information, wherein the indication information indicates a PRACH resource, the PRACH resource comprises a first PRACH resource and a second PRACH resource, the N SSBs comprise a first SSB and a second SSB, the first SSB and the second SSB are associated with the first PRACH resource, the second SSB is associated with the second PRACH resource, and a quantity of PRACHs associated with the first SSB is different from a quantity of PRACHs associated with the second SSB; and
receiving a preamble sequence on the PRACH resource.

10. The method according to claim 9, wherein the PRACH resource comprises an RO resource and/or a code resource, and that a quantity of PRACH resources associated with the first SSB is different from a quantity of PRACH resources associated with the second SSB comprises:
a quantity of RO resources associated with the first SSB is different from a quantity of RO resources associated with the second SSB.

11. The method according to claim 9 or 10, wherein the first SSB belongs to a first SSB set, the second SSB belongs to a second SSB set, the second SSB set comprises D SSBs, and D is a positive integer greater than or equal to 1; and
the D SSBs belong to Q mutually exclusive non-zero SSB subsets, Q is a positive integer greater than or equal to 2, the Q mutually exclusive non-zero SSB subsets comprise a first SSB subset and a second SSB subset, the first SSB subset comprises a third SSB, the second SSB subset comprises a fourth SSB, and a quantity of ROs associated with the third SSB is different from a quantity of ROs associated with the fourth SSB; or
any one of the D SSBs is associated with a same quantity of ROs.

12. The method according to claim 11, wherein a quantity of RSRP thresholds corresponding to the first SSB subset is different from a quantity of RSRP thresholds corresponding to the second SSB subset.

13. The method according to any one of claims 9 to 12, wherein that the indication information indicates a PRACH resource comprises:
the indication information indicates a first parameter, and the first parameter comprises at least one of the following: an SSB in the second SSB set, a subset to which the SSB in the second SSB set belongs, quantities of ROs corresponding to SSBs in different subsets of the second SSB set, time-frequency positions of PRACHs corresponding to the SSBs in different subsets of the second SSB set, maximum quantities of repeated sending times corresponding to the SSBs in different subsets of the second SSB set, division formats of preamble sequences corresponding to the SSBs in different subsets of the second SSB set, a quantity of ROs corresponding to the SSB in the second SSB set, a time-frequency position of a PRACH corresponding to the SSB in the second SSB set, a maximum quantity of repeated sending times corresponding to the SSB in the second SSB set, or a division format of a preamble sequence corresponding to the SSB in the second SSB set.

14. The method according to claim 13, wherein the indication information comprises at least one of a first field, a second field, a third field, a fourth field, and a fifth field;
the first field indicates the time-frequency positions of the PRACHs corresponding to the SSBs in different subsets of the second SSB set, a length of the first field is a minimum integer greater than log₂(M), and M is a type of a quantity of slots comprised in a time interval between the first PRACH and the second PRACH;
when the second field indicates subsets of the N SSBs, a length of the second field is a minimum integer greater than (P-1)*log₂(N), and P is a quantity of subsets;
when the third field indicates the quantities of ROs corresponding to the SSBs in different subsets of the second SSB set, a length of the third field is a minimum integer greater than log₂(O), and O is a type of a cardinality of a quantity of ROs;
when the fourth field indicates the maximum quantities of repeated sending times corresponding to the SSBs in different subsets of the second SSB set, a length of the fourth field is a minimum integer greater than log₂(R), and R is a type of a cardinality of quantities of repeated sending times corresponding to the SSBs in different subsets; and
when the fifth field indicates the division formats of the preamble sequences of the SSBs in different subsets of the second SSB set, a length of the fifth field is a minimum integer greater than log₂(T), and T is a type of division of the preamble sequences of the SSBs in different subsets.

15. The method according to any one of claims 12 to 14, wherein the indication information further indicates a threshold of an RSRP, and different thresholds of the RSRP correspond to different repetition quantities.

16. The method according to any one of claims 12 to 15, wherein the receiving a preamble sequence on the PRACH resource comprises:
receiving the preamble sequence on the PRACH resource based on a repetition quantity corresponding to a first beam, wherein the first beam is determined from N beams, an RSRP corresponding to the first beam is a largest RSRP in N RSRPs, a repetition quantity corresponding to the first beam is determined based on the RSRP corresponding to the first beam and an RSRP threshold set, and the RSRP threshold set corresponds to an SSB subset corresponding to the first beam.

17. A communication apparatus, comprising a transceiver module and a processing module, wherein the transceiver module is configured to receive N SSBs, and N is a positive integer greater than or equal to 2; the transceiver module is further configured to receive indication information, wherein the indication information indicates a PRACH resource, the PRACH resource comprises a first PRACH resource and a second PRACH resource, the N SSBs comprise a first SSB and a second SSB, the first SSB and the second SSB are associated with the first PRACH resource, the second SSB is associated with the second PRACH resource, and a quantity of PRACH resources associated with the first SSB is different from a quantity of PRACH resources associated with the second SSB; and the transceiver module is further configured to send a preamble sequence on the PRACH resource based on the indication information.

18. The apparatus according to claim 17, wherein the PRACH resource comprises an RO resource and/or a code resource, and that a quantity of PRACH resources associated with the first SSB is different from a quantity of PRACH resources associated with the second SSB comprises:
a quantity of RO resources associated with the first SSB is different from a quantity of RO resources associated with the second SSB.

19. The apparatus according to claim 17 or 18, wherein the first SSB belongs to a first SSB set, the second SSB belongs to a second SSB set, the second SSB set comprises D SSBs, and D is a positive integer greater than or equal to 1; and
the D SSBs belong to Q mutually exclusive non-zero SSB subsets, Q is a positive integer greater than or equal to 2, the Q mutually exclusive non-zero SSB subsets comprise a first SSB subset and a second SSB subset, the first SSB subset comprises a third SSB, the second SSB subset comprises a fourth SSB, and a quantity of ROs associated with the third SSB is different from a quantity of ROs associated with the fourth SSB; or
any one of the D SSBs is associated with a same quantity of ROs.

20. The apparatus according to claim 19, wherein a quantity of RSRP thresholds corresponding to the first SSB subset is different from a quantity of RSRP thresholds corresponding to the second SSB subset.

21. The apparatus according to any one of claims 17 to 20, wherein that the indication information indicates a PRACH resource comprises:
the indication information indicates a first parameter, and the first parameter comprises at least one of the following: an SSB in the second SSB set, a subset to which the SSB in the second SSB set belongs, quantities of ROs corresponding to SSBs in different subsets of the second SSB set, time-frequency positions of PRACHs corresponding to the SSBs in different subsets of the second SSB set, maximum quantities of repeated sending times corresponding to the SSBs in different subsets of the second SSB set, division formats of preamble sequences corresponding to the SSBs in different subsets of the second SSB set, a quantity of ROs corresponding to the SSB in the second SSB set, a time-frequency position of a PRACH corresponding to the SSB in the second SSB set, a maximum quantity of repeated sending times corresponding to the SSB in the second SSB set, or a division format of a preamble sequence corresponding to the SSB in the second SSB set.

22. The apparatus according to claim 21, wherein the indication information comprises at least one of a first field, a second field, a third field, a fourth field, and a fifth field;
the first field indicates the time-frequency positions of the PRACHs corresponding to the SSBs in different subsets of the second SSB set, a length of the first field is a minimum integer greater than log₂(M), and M is a type of a quantity of slots comprised in a time interval between the first PRACH and the second PRACH;
when the second field indicates subsets of the N SSBs, a length of the second field is a minimum integer greater than (P-1)*log₂(N), and P is a quantity of subsets;
when the third field indicates the quantities of ROs corresponding to the SSBs in different subsets of the second SSB set, a length of the third field is a minimum integer greater than log₂(O), and O is a type of a cardinality of a quantity of ROs;
when the fourth field indicates the maximum quantities of repeated sending times corresponding to the SSBs in different subsets of the second SSB set, a length of the fourth field is a minimum integer greater than log₂(R), and R is a type of a cardinality of quantities of repeated sending times corresponding to the SSBs in different subsets; and
when the fifth field indicates the division formats of the preamble sequences of the SSBs in different subsets of the second SSB set, a length of the fifth field is a minimum integer greater than log₂(T), and T is a type of division of the preamble sequences of the SSBs in different subsets.

23. The apparatus according to any one of claims 20 to 22, wherein the indication information further indicates an RSRP threshold corresponding to the first SSB subset and/or an RSRP threshold corresponding to the second SSB subset, and different RSRP thresholds correspond to different repetition quantities.

24. The apparatus according to any one of claims 20 to 23, wherein the processing module is configured to measure N RSRPs corresponding to the N SSBs; the processing module is further configured to determine a first beam from N beams, wherein an RSRP corresponding to the first beam is a largest RSRP in the N RSRPs; the processing module is further configured to determine, based on the RSRP corresponding to the first beam and an RSRP threshold set corresponding to an SSB subset corresponding to the first beam, a repetition quantity corresponding to the first beam; and the transceiver module is specifically configured to send the preamble sequence on the PRACH resource based on the repetition quantity corresponding to the first beam.

25. A communication apparatus, comprising a processing module and a transceiver module, wherein the transceiver module is configured to send N SSBs, and N is a positive integer greater than or equal to 2; the transceiver module is further configured to send indication information, wherein the indication information indicates a PRACH resource, the PRACH resource comprises a first PRACH resource and a second PRACH resource, the N SSBs comprise a first SSB and a second SSB, the first SSB and the second SSB are associated with the first PRACH resource, the second SSB is associated with the second PRACH resource, and a quantity of PRACHs associated with the first SSB is different from a quantity of PRACHs associated with the second SSB; and the transceiver module is further configured to receive a preamble sequence on the PRACH resource.

26. The apparatus according to claim 25, wherein the PRACH resource comprises an RO resource and/or a code resource, and that a quantity of PRACH resources associated with the first SSB is different from a quantity of PRACH resources associated with the second SSB comprises:
a quantity of RO resources associated with the first SSB is different from a quantity of RO resources associated with the second SSB.

27. The apparatus according to claim 25 or 26, wherein the first SSB belongs to a first SSB set, the second SSB belongs to a second SSB set, the second SSB set comprises D SSBs, and D is a positive integer greater than or equal to 1; and
the D SSBs belong to Q mutually exclusive non-zero SSB subsets, Q is a positive integer greater than or equal to 2, the Q mutually exclusive non-zero SSB subsets comprise a first SSB subset and a second SSB subset, the first SSB subset comprises a third SSB, the second SSB subset comprises a fourth SSB, and a quantity of ROs associated with the third SSB is different from a quantity of ROs associated with the fourth SSB; or
any one of the D SSBs is associated with a same quantity of ROs.

28. The apparatus according to claim 27, wherein a quantity of RSRP thresholds corresponding to the first SSB subset is different from a quantity of RSRP thresholds corresponding to the second SSB subset.

29. The apparatus according to any one of claims 25 to 28, wherein that the indication information indicates a PRACH resource comprises:
the indication information indicates a first parameter, and the first parameter comprises at least one of the following: an SSB in the second SSB set, a subset to which the SSB in the second SSB set belongs, quantities of ROs corresponding to SSBs in different subsets of the second SSB set, time-frequency positions of PRACHs corresponding to the SSBs in different subsets of the second SSB set, maximum quantities of repeated sending times corresponding to the SSBs in different subsets of the second SSB set, division formats of preamble sequences corresponding to the SSBs in different subsets of the second SSB set, a quantity of ROs corresponding to the SSB in the second SSB set, a time-frequency position of a PRACH corresponding to the SSB in the second SSB set, a maximum quantity of repeated sending times corresponding to the SSB in the second SSB set, or a division format of a preamble sequence corresponding to the SSB in the second SSB set.

30. The apparatus according to claim 29, wherein the indication information comprises at least one of a first field, a second field, a third field, a fourth field, and a fifth field;
the first field indicates the time-frequency positions of the PRACHs corresponding to the SSBs in different subsets of the second SSB set, a length of the first field is a minimum integer greater than log₂(M), and M is a type of a quantity of slots comprised in a time interval between the first PRACH and the second PRACH;
when the second field indicates subsets of the N SSBs, a length of the second field is a minimum integer greater than (P-1)*log₂(N), and P is a quantity of subsets;
when the third field indicates the quantities of ROs corresponding to the SSBs in different subsets of the second SSB set, a length of the third field is a minimum integer greater than log₂(O), and 0 is a type of a cardinality of a quantity of ROs;
when the fourth field indicates the maximum quantities of repeated sending times corresponding to the SSBs in different subsets of the second SSB set, a length of the fourth field is a minimum integer greater than log₂(R), and R is a type of a cardinality of quantities of repeated sending times corresponding to the SSBs in different subsets; and
when the fifth field indicates the division formats of the preamble sequences of the SSBs in different subsets of the second SSB set, a length of the fifth field is a minimum integer greater than log₂(T), and T is a type of division of the preamble sequences of the SSBs in different subsets.

31. The apparatus according to any one of claims 28 to 30, wherein the indication information further indicates a threshold of an RSRP, and different thresholds of the RSRP correspond to different repetition quantities.

32. The apparatus according to any one of claims 28 to 31, wherein the transceiver module is specifically configured to receive the preamble sequence on the PRACH resource based on a repetition quantity corresponding to a first beam, wherein the first beam is determined from N beams, an RSRP corresponding to the first beam is a largest RSRP in N RSRPs, a repetition quantity corresponding to the first beam is determined based on the RSRP corresponding to the first beam and an RSRP threshold set, and the RSRP threshold set corresponds to an SSB subset corresponding to the first beam.

33. A communication system, comprising the communication apparatus according to any one of claims 17 to 24 and the communication apparatus according to any one of claims 25 to 32.

34. A communication apparatus, comprising:
a processor, configured to execute computer instructions stored in a memory, to enable the apparatus to perform the method according to any one of claims 1 to 16.

35. The apparatus according to claim 34, wherein the apparatus further comprises the memory.

36. The apparatus according to claim 34 or 35, wherein the apparatus further comprises a communication interface, and the communication interface is coupled to the processor; and
the communication interface is configured to input and/or output information.

37. The apparatus according to any one of claims 34 to 36, wherein the apparatus is a chip.

38. A computer program, wherein when the computer program is executed by a communication apparatus, the method according to any one of claims 1 to 16 is implemented.

39. A computer-readable storage medium, wherein the storage medium stores a computer program or instructions, and when the computer program or the instructions are executed by a communication apparatus, the method according to any one of claims 1 to 16 is implemented.
